(19) Europäisches Patentamt
European Patent Office
Office européen des brevets

(11) **EP 3 342 844 A1**

(12) **EUROPEAN PATENT APPLICATION**
published in accordance with Art. 153(4) EPC

(43) Date of publication:
**04.07.2018 Bulletin 2018/27**

(21) Application number: **16838859.3**

(22) Date of filing: **19.05.2016**

(51) Int Cl.:
***C10G 65/12*** *(2006.01)*
***B01J 23/44*** *(2006.01)*
***B01J 27/19*** *(2006.01)*
***B01J 29/74*** *(2006.01)*
***C10G 45/64*** *(2006.01)*
***C10G 47/12*** *(2006.01)*

(86) International application number:
**PCT/JP2016/064899**

(87) International publication number:
**WO 2017/033512 (02.03.2017 Gazette 2017/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.08.2015 JP 2015166569**

(71) Applicant: **JXTG Nippon Oil & Energy Corporation**
**Chiyoda-ku**
**Tokyo 1008162 (JP)**

(72) Inventors:
- **TAKAHAMA Koshi**
  **Tokyo 100-8162 (JP)**
- **HIRANO Tomohisa**
  **Tokyo 100-8162 (JP)**
- **SAKANOUE Munehiro**
  **Tokyo 100-8162 (JP)**
- **HAYASAKA Kazuaki**
  **Tokyo 100-8162 (JP)**

(74) Representative: **Grünecker Patent- und Rechtsanwälte**
**PartG mbB**
**Leopoldstraße 4**
**80802 München (DE)**

(54) **METHOD FOR MANUFACTURING LUBRICANT BASE OIL**

(57) A method for producing a base oil for lubricant oils comprising: a first step of hydrocracking a petroleum slack wax having a content percentage of a heavy matter having 30 or more carbon atoms of 80% by mass or more and a content percentage of an oil of 15% by mass or less so that a crack per mass of the heavy matter is 5 to 30% by mass to obtain a hydrocracked oil comprising the heavy matter and a hydrocracked product thereof; and a second step of obtaining the base oil for lubricant oils from the hydrocracked oil.

*Fig.1*

100
L40
80
L32
L31
L1
L22
L4
60
L21
L34
L33
L36
L35
L24
70
L10
L23
20
L10'
L11
Product oil 1
Product oil 2
L3
50
L12
L2
L9
Product oil 3
10
30
L7
40
L8
51
L13



Printed by Jouve, 75001 PARIS (FR)

## Description

### Technical field

The present invention relates to a method for producing a base oil for lubricant oils.

### Background Art

In the petroleum products, lubricating oils, for example, are the products with the importance weighed on the flowability at a low temperature. For this reason, a base oil used for these products desirably has a wax component such as a normal paraffin, or the like, which causes the aggravation of the low temperature flowability, being completely or partially removed, or converted to a different component from a wax component.
a known dewaxing technique for converting a wax component in a hydrocarbon oil to a non-wax component is, for example, a hydroisomerization dewaxing in which a hydrocarbon oil is, in the presence of hydrogen, allowed to contact a hydroisomerization dewaxing catalyst having dual functions of hydrogenation-dehydration ability and isomerization ability to isomerize a normal paraffin in the hydrocarbon oil to an isoparaffin (e.g., Patent Literature 1).

### Citation List

### Patent Literature

Patent Literature 1: National Publication of International Publication Application No. 2006-502297

### Summary of Invention

### Technical Problem

Several kinds of the base oil for lubricant oil products are available depending on purpose of use, and the low temperature performance and viscometric properties required vary in each product so that it is desirable to obtain as many as fractions corresponding to the intended products.

Thus, when a feed oil containing a fraction heavier (heavy fraction) than a fraction corresponding to the intended product (product fraction) is used for the production of a base oil for lubricant oils, a method is known in which the feed oil is hydrocracked to convert the heavy matter to the light matter before performing the hydroisomerization dewaxing described above.

An object of the present invention is to provide a method for producing a base oil for lubricant oils capable of efficiently obtaining a base oil for lubricant oils having good viscometric properties using a petroleum slack wax as a feed oil.

### Solution to Problem

One aspect of the present invention relates to a method for producing a base oil for lubricant oils comprising: a first step of hydrocracking a petroleum slack wax having a content percentage of a heavy matter having 30 or more carbon atoms of 80% by mass or more and a content percentage of an oil of 15% by mass or less so that a crack per mass of the heavy matter is 5 to 30% by mass to obtain a hydrocracked oil comprising the heavy matter and a hydrocracked product thereof; and a second step of obtaining the base oil for lubricant oils from the hydrocracked oil.

In the above production method, when the content percentage of the oil in the petroleum slack wax used as the feed oil is set to be 15% by mass or less and the crack per mass of the heavy matter in hydrocracking is set to be 5 to 30% by mass, the base oil for lubricant oils having good viscometric properties can be efficiently obtained.

In one aspect, the second step may comprise a step of obtaining a dewaxed oil by hydroisomerization dewaxing the hydrocracked oil; a step of obtaining a hydrorefined oil by hydrorefining the dewaxed oil; and a step of obtaining the base oil for lubricant oils by distilling the hydrorefined oil.

In one aspect, the second step may comprise: a step of obtaining a base oil fraction comprising the hydrocracked product by distilling the hydrocracked oil; a step of obtaining a dewaxed oil by hydroisomerization dewaxing the base oil fraction; a step of obtaining a hydrorefined oil by hydrorefining the dewaxed oil; and a step of obtaining the base oil for lubricant oils by distilling the hydrorefined oil.

In one aspect, the above production method may further comprise a step of obtaining the petroleum slack wax from a high-oil-content slack wax having a content percentage of an oil of greater than 15% by mass.

In one aspect, a content percentage of sulfur in the petroleum slack wax may be 0.0001 to 3.0% by mass.

In one aspect, a kinematic viscosity of the base oil for lubricant oils at 100°C may be 3.5 $mm^2/s$ or more and 4.5 $mm^2/s$ or less, and a viscosity index of the base oil for lubricant oils may be 135 or more.

In one aspect, the first step may be a step of contacting the petroleum slack wax with a hydrocracking catalyst in the presence of hydrogen to hydrocrack the petroleum slack wax. Moreover, the hydrocracking catalyst may contain a porous inorganic oxide comprising 2 or more elements selected from the group consisting of aluminium, silicon, zirconium, boron, titanium and magnesium and at least 1 active metal selected from elements belonging to the Group 6, 8, 9 and 10 in the periodic table supported on the porous inorganic oxide.

In one aspect, the hydroisomerization dewaxing may be carried out using a hydroisomerization dewaxing catalyst. Moreover, the hydroisomerization dewaxing catalyst may contain a carrier comprising zeolite having a 10-membered ring one dimensional pore structure and a binder, and platinum and/or palladium supported on the carrier, and have a carbon content of 0.4 to 3.5% by mass. In addition, the zeolite may be derived from a cation-exchanged form of an organic template-containing zeolite containing an organic template and having a 10-membered ring one dimensional pore structure.

In one aspect, the hydroisomerization dewaxing may be carried out using a hydroisomerization dewaxing catalyst. In addition, the hydroisomerization dewaxing catalyst may be a hydroisomerization dewaxing catalyst containing a carrier comprising zeolite having a 10-membered ring one dimensional pore structure and a binder, and platinum and/or palladium supported on the carrier, and having a micropore volume of 0.02 to 0.12 ml/g. In addition, the zeolite may be derived from a cation-exchanged form of an organic template-containing zeolite containing an organic template and having a 10-membered ring one dimensional pore structure. In addition, a micropore volume per unit mass of the zeolite may be 0.01 to 0.12 ml/g. Note that the micropore as used in the present specification is "a pore having a diameter of 2 nm or less" as defined in IUPAC (International Union of Pure and Applied Chemistry).

## Advantageous Effects of Invention

The present invention provides a method for producing a base oil for lubricant oils capable of efficiently providing a base oil for lubricant oils having good viscometric properties using a petroleum slack wax as a feed oil.

## Brief Description of Drawings

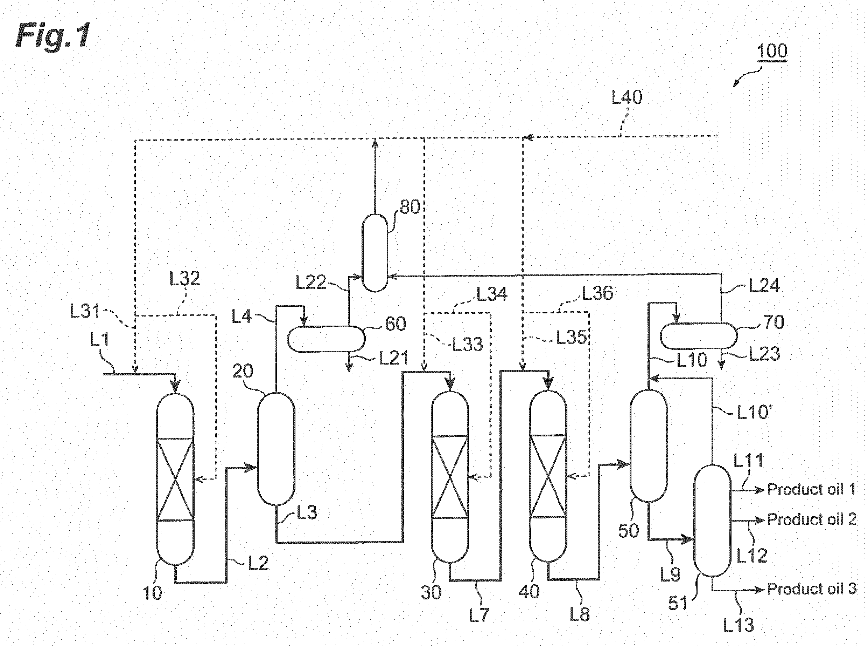

[Figure 1] Figure 1 is a flow diagram showing an example of the apparatus for producing a base oil for lubricant oils to carry out the method for producing a base oil for lubricant oils according to one embodiment.

## Description of Embodiments

Hereinafter, the preferred embodiments of the present invention is described with reference to the drawings.

The method for producing a base oil for lubricant oils according to the present embodiment comprises: a first step of hydrocracking a petroleum slack wax having a content percentage of a heavy matter having 30 or more carbon atoms of 80% by mass or more and a content percentage of an oil of 15% by mass or less so that a crack per mass of the heavy matter is 5 to 30% by mass to obtain a hydrocracked oil comprising the heavy matter and a hydrocracked product of the heavy matter; and a second step of obtaining the base oil for lubricant oils from the hydrocracked oil.

In the production method according to the present embodiment, when the content percentage of the oil in the petroleum slack wax used as the feed oil is set to be 15% by mass or less and the crack per mass of the heavy matter in hydrocracking is set to be 5 to 30% by mass, the base oil for lubricant oils having good viscometric properties can be efficiently obtained.

Each of the steps is described in detail below.

(First step)

The first step is a step of hydrocracking the petroleum slack wax (hereinafter simply referred to as a "feed oil") to obtain a hydrocracked oil comprising a heavy matter (hydrocarbon having 30 or more carbon atoms) and a hydrocracked product thereof (e.g., hydrocarbon having below 30 carbon atoms).

In the petroleum slack wax subjected to the first step, a content percentage of the heavy matter having 30 or more carbon atoms is 80% by mass or more, and a content percentage of an oil is 15% by mass or less. Note that, in the present specification, the content percentage of the oil is measured in conformity with "Determination of oil content" described in JIS K2235. Note that the petroleum slack wax refers to a slack wax obtained during the course of petroleum refining, and is a hydrocarbon oil whose main component is a normal paraffin. Further, the petroleum slack wax subjected to the first step may have adjusted components such that the content percentages of the heavy matter and the oil are within the above ranges prior to the first step. More specifically, the petroleum wax may be the one that can be obtained by removing the oil or adding the heavy matter from a high-oil-content slack wax having a content percentage of the oil of greater than 15% by mass.

In the first step, the petroleum slack wax is hydrocracked so that a crack per mass of the heavy matter is 5 to 30% by mass. Note that, in the present specification, the crack per mass (% by mass) of the heavy matter can be determined using a formula $((C_1\text{-}C_2)/C_1) \times 100$ when a content percentage of the heavy matter having 30 or more carbon atoms in the stock, the petroleum slack wax is $C_1$ and a content percentage of the heavy matter having 30 or more carbon atoms in the hydrocracked oil obtained through hydrocracking is $C_2$.

In the first step, a part of the heavy matter is converted to hydrocarbon having a lower boiling point than the heavy matter (hydrocracked product). A part of this hydrocracked product is a suitable base oil fraction to be used for a base oil for lubricant oils, whereas other parts of which may be light fractions lighter than the base oil fraction (examples include fuel oil fractions and solvent fractions). Also, other parts of the heavy matter are not sufficiently hydrocracked and remains in the hydrocracked oil as the heavy content.

In the first step, 5 to 30% by mass of the heavy matter is cracked to hydrocarbon having below 30 carbon atoms through hydrocracking of the petroleum slack wax. When the crack per mass of the heavy matter exceeds 30% by mass in the first step, the viscosity index of the base oil for lubricant oils obtained tends to be reduced. Further, when the crack per mass of the heavy matter is below 5% by mass in the first step, the production of fuel oils, such as naphtha, can be controlled but it tends to become difficult to obtain a base oil for lubricant oils with high quality (e.g., when a kinematic viscosity at 100°C is 3.5 $mm^2/s$ or more and 4.5 $mm^2/s$ or less, a viscosity index is 135 or more) in a high yield. More specifically, in the production method according to the present embodiment, by hydrocracking the particular petroleum slack wax in the first step so that a crack per mass of the heavy matter is 5 to 30% by mass, a base oil for lubricant oils with high quality can be efficiently produced.

Further, when a crack per mass of the heavy matter is 5% by mass or more, the desulfurization and denitrogenation proceed sufficiently in the first step even when the petroleum slack wax contains sulfur and nitrogen as described later, and hence the adverse influence to the subsequent reaction (e.g., hydroisomerization dewaxing) can be well prevented. As opposed to this, when the conditions for hydrocracking are set to the condition under which a crack per mass of the heavy matter is below 5% by mass, desulfurization does not sufficiently proceed leaving a large amount of sulfur contained in the petroleum slack wax to the subsequent step. In this case, to prevent the catalytic activity of a hydroisomerization dewaxing catalyst, or the like, from deteriorating, it is required, for example, to set the conditions of hydroisomerization dewaxing even much more strictly in the dewaxing step. Thus, when the conditions of hydroisomerization dewaxing are set more strictly, a crack per mass increases and a yield of the intended base oil for lubricant oils tends to reduce.

In addition, in the first step, hydrocracking is carried out using a petroleum slack wax having a content percentage of an oil of 15% by mass or less as a feed oil. When the content percentage of an oil in the petroleum slack wax exceeds 15% by mass, aroma and naphthene are contained abundantly, leading to a tendency for the viscosity index of the base oil for lubricant oils to decline. In embodiments, by setting the content percentage of an oil in the petroleum slack wax to be 15% by mass or less, and carrying out hydrocracking under the above conditions, a base oil for lubricant oils with high quality can be efficiently obtained.

The petroleum slack wax may contain sulfur. A content percentage of sulfur in the petroleum slack wax may be, for example, 0.0001% by mass or more, 0.001% by mass or more, or 0.01% by mass or more. Moreover, a content percentage of sulfur in the petroleum slack wax may be, for example, 3.0% by mass or less, 1.0% by mass or less, or 0.5% by mass or less. In the production method according to the present embodiment, desulfurization proceeds along with the hydrocracking of the petroleum slack wax in the first step, and hence even when sulfur is contained in the petroleum slack wax in the above range, the deterioration of the hydroisomerization dewaxing catalyst, or the like, by sulfur in the subsequent step can be well prevented. Note that, in the present specification, a content percentage of sulfur refers to a value measured in conformity with "Crude petroleum and petroleum products - Determination of sulfur content - Part 6: Ultraviolet fluorescence method" described in JIS K2541-6.

The petroleum slack wax may also contain nitrogen. A content percentage of nitrogen in the petroleum slack wax may be, for example, 0.0001% by mass or more, or 0.001% by mass or more. Moreover, a content percentage of nitrogen in the petroleum slack wax may be, for example, 0.5% by mass or less, or 0.1% by mass or less. Note that, in the present specification, a content percentage of nitrogen refers to a value measured in conformity with "Crude petroleum and petroleum products - Determination of nitrogen content" described in JIS K2609.

A kinematic viscosity of the petroleum slack wax at 100°C may be 6.0 $mm^2/s$ or more, or 7.0 $mm^2/s$ or more. Further, the kinematic viscosity may be 100.0 $mm^2/s$ or less, or 50.0 $mm^2/s$ or less.

In the petroleum slack wax, the content percentage of an oil is 15% by mass or less, and preferably, may be 10% by mass or less.

In the petroleum slack wax, the content percentage of a heavy matter is 80% by mass or more, preferably 90% by mass or more, and more preferably 95% by mass or more.

In the petroleum slack wax, the ratio of the total amount of the heavy matter (hydrocarbon having 30 or more

carbon atoms) ($A_1$) to a content of hydrocarbon having 30 or more and 60 or less carbon atoms ($A_2$), ($A_2/A_1$), is preferably 0.6 or more, and more preferably 0.8 or more. In such a petroleum slack wax, through hydrocracking at the above crack per mass, more hydrocarbon having a suitable number of carbon atoms for a base oil for lubricant oils is obtained, and hence a base oil for lubricant oils with high quality can be produced in a higher yield.

In one aspect, the petroleum slack wax may be those having a 10% by volume distillation temperature of 400 to 500°C and a 90% by volume distillation temperature of 500 to 600°C. Moreover, in other aspects, the petroleum slack wax may be those having a 10% by volume distillation temperature of 500 to 600°C and a 90% by volume distillation temperature of 600 to 700°C. Note that, the 10% by volume distillation temperature and the 90% by volume distillation temperature are the values to be measured in conformity with JIS K2254 "Petroleum products - Determination of distillation characteristics - Gas chromatography method".

In the first step, for example, the petroleum slack wax is allowed to contact the hydrocracking catalyst in the presence of hydrogen to carry out hydrocracking. Note that the hydrocracking catalyst and the conditions for hydrocracking reaction can be suitably selected from the range in which a crack per mass of the heavy matter is 5 to 30% by mass in reference to the hydrocracking catalyst and the reaction conditions to be described later.

One example of suitable hydrocracking catalysts will be described below as a hydrocracking catalyst A.

Hydrocracking catalyst A comprises a porous inorganic oxide composed of 2 or more elements selected from aluminium, silicon, zirconium, boron, titanium and magnesium and at least 1 metal selected from the elements belonging to the Group 6, Group 8, Group 9 and Group 10 in the periodic table supported on the porous inorganic oxide. According to the hydrocracking catalyst A, even when the feed oil (petroleum slack wax) contains sulfur and nitrogen in the range described above, the reduction of catalytic activity caused by sulfur poisoning is sufficiently controlled.

For the carrier of the hydrocracking catalyst A, the porous inorganic oxide composed of at least 2 elements selected from aluminium, silicon, zirconium, boron, titanium, and magnesium is used. The porous inorganic oxide is preferably 2 or more selected from aluminium, silicon, zirconium, boron, titanium, and magnesium from a viewpoint of further enhancing hydrocracking activity, and more preferably an inorganic oxide containing aluminium and other elements (a complex oxide of an aluminum oxide and other oxides). Also, the carrier for the hydrocracking catalyst A may be an inorganic carrier having solid acidity.

When the porous inorganic oxide contains aluminium as a constituent element, a content of aluminium is, in terms of alumina, preferably 1 to 97% by mass, more preferably 10 to 95% by mass, and further preferably 20 to 90% by mass, based on the total amount of porous inorganic oxide. When an aluminium content, in term of alumina, is below 1% by mass, physical properties such as carrier acidity, and the like, are not suitable, unlikely exhibiting sufficient hydrocracking activity. On the other hand, when an aluminium content, in terms of alumina, exceeds 97% by mass, the solid acidity strength of the catalyst becomes inadequate, likely reducing the activity.

The method for introducing silicon, zirconium, boron, titanium, and/or magnesium, which is the carrier constituent element other than aluminium, is not particularly limited and a solution containing these elements may be used as a feedstock. For example, silicon, water glass, or silica sol for silicon, boric acid for boron, phosphoric acid or alkali metal salts of phosphoric acid for phosphorus, titanium sulfide, titanium tetrachloride, various alkoxide salts for titanium, zirconium sulfurate and various alkoxide salts for zirconium can be used.

Further, the porous inorganic oxide may contain phosphorus as a constituent element. When phosphorus is contained, a content thereof is, in terms of an oxide, preferably 0.1 to 10% by mass, more preferably 0.5 to 7% by mass, and further preferably 2 to 6% by mass based on the total amount of the porous inorganic oxide. When a phosphorus content is below 0.1% by mass, sufficient hydrocracking activity is not likely to be exhibited, whereas a content exceeds 10% by mass, hydrocracking may excessively proceed.

The feedstocks of carrier constituent component other than the aluminium oxide described above are preferably added in a step before the carrier is calcined. For example, the above feedstock is added in advance to an aluminium aqueous solution, subsequently an aluminium hydroxide gel containing these constituent components may be prepared, or the above feedstock material may be added to the blended aluminium hydroxide gel. Alternatively, the above feedstock may be added during the step of adding and kneading water or an acid aqueous solution to a commercial aluminium oxide intermediate or a boehmite powder, but more preferably is caused to co-exist at the stage of blending an aluminium hydroxide gel. Further, the carrier constituent components other than an aluminium oxide are prepared in advance, and an alumina feedstock such as a boehmite powder, or the like, may be blended therewith. The effect production mechanism of the carrier constituent components other than an aluminium oxide is not necessarily clarified, but the components are presumed to form a complex oxidation state with aluminium which is considered to increase the carrier surface area and produce an interaction with an active metal by which the activity is influenced.

The above porous inorganic oxide as the carrier supports at least 1 metal selected from the elements belonging to the Groups 6, Group 8, Group 9 and Group 10 of the periodic table. Of these metal, it is preferred to use at least 2 metals selected from cobalt, molybdenum, nickel, and tungsten in combination. Examples of the preferable combination include cobalt-molybdenum, nickel-molybdenum, nickel-cobalt-molybdenum, and nickel-tungsten. Of these, the combinations of nickel-molybdenum, nickel-cobalt-molybdenum, and nickel-tungsten are more preferable. For hydrocracking, these metals are used as converted to a state of sulfide.

For a content of the active metal based on a catalyst mass, the total amount of tungsten and molybdenum supported ranges preferably from 12 to 35% by mass, and more preferably 15 to 30% by mass, in terms of the oxide. When the total amount of tungsten and molybdenum supported is below 12% by mass, the active sites become fewer, likely failing to achieve sufficient activity. On the other hand, when the total supported amount exceeds 35% by mass, the metals are not effectively dispersed, likely failing to achieve sufficient activity. The total amount of cobalt and nickel supported ranges preferably 1.0 to 15% by mass, and more preferably 1.5 to 13% by mass, in terms of the oxide. When the total amount of cobalt and nickel supported is below 1.0% by mass, sufficient co-catalyst effects are not achieved and the activity tends to be reduced. On the other hand, when the total amount supported exceeds 15% by mass, the metals are not effectively dispersed, likely failing to achieve sufficient activity.

The above porous inorganic oxide as the carrier preferably supports phosphorous with an active metal as the active component. The amount of phosphorous supported on the carrier is in terms of oxide, preferably 0.5 to 10% by mass, and more preferably 1.0 to 5.0% by mass. When an amount of phosphorous supported is below 0.5% by mass, the effect of phosphorous is not sufficiently exhibited, whereas an amount thereof supported exceeds 10% by mass, the acidity properties of the catalyst become strong, likely causing a cracking reaction. The method for supporting phosphorous on the carrier is not particularly limited, and phosphorous may be allowed to co-exist in an aqueous solution containing a metal belonging to the Groups 8 to 10 and a metal belonging to the Group 6 in the periodic table described above and supported, or may be successively supported before or after a metal is supported.

The method for containing these active metals in the catalyst is not particularly limited, and a known method routinely adopted for producing a hydrocracking catalyst can be used. Typically, the method for impregnating a catalyst support with a solution containing a salt of an active metal is preferably employed. Alternatively, equilibrium adsorption method, pore-filling method, and incipient-wetness method are also preferably employed. For example, the pore-filling method is a method in which a pore volume of the carrier is measured in advance and the carrier is impregnated with a metal salt solution in an equal volume to the measured volume. Note that the impregnation method is not particularly limited and can be carried out by a suitable method in accordance with an amount of metal supported and physical properties of a catalyst carrier.

In the present embodiment, the number of kinds of hydrocracking catalyst A used is not particularly limited. For example, a catalyst of one kind may be used singly, or a plural of catalysts having different active metal species and carrier constituent components may be used. Examples of the preferable combination for using several different catalysts include a nickel-molybdenum containing catalyst followed by a cobalt-molybdenum containing catalyst in a subsequent step, a nickel-molybdenum containing catalyst followed by a nickel-cobalt-molybdenum containing catalyst in a subsequent step, a nickel-tungsten containing catalyst followed by a nickel-cobalt-molybdenum containing catalyst in a subsequent step, a nickel-cobalt-molybdenum containing catalyst followed by a cobalt-molybdenum containing catalyst in a subsequent step. A nickel-molybdenum catalyst may further be combined in the previous or subsequent step of these combinations.

When several catalysts having different carrier components are combined, a catalyst having an aluminium oxide content range of 80 to 99% by mass may be used in the subsequent step of a catalyst having an aluminium oxide content of 30% by mass or more and below 80% by mass, based on the total mass of the carrier.

Further, in addition to the hydrocracking catalyst A, a guard catalyst, a demetallizing catalyst, and/or an inactive filler may be used as necessary for the purpose of trapping a scale content or supporting the hydrocracking catalyst A at the partition of the catalyst bed. Note that these can be used singly or in combination.

The pore volume of the hydrocracking catalyst A by a nitrogen absorption BET method is preferably 0.30 to 0.85 ml/g, and more preferably 0.45 to 0.80 ml/g. When a pore volume is below 0.30 ml/g, the dispersibility of the supported metal becomes insufficient, likely reducing the active sites. Further, when a pore volume exceeds 0.85 ml/g, the catalyst strength becomes insufficient, likely causing the catalyst to powder and crush while in use.

Further, the average pore diameter of the catalyst determined by a nitrogen adsorption BET method is preferably 5 to 15 nm, and more preferably 6 to 12 nm. When an average pore diameter is below 5 nm, the reaction substrate is not sufficiently dispersed in the pores, likely deteriorating the reactivity. On the other hand, when an average pore diameter exceeds 15 nm, the pore surface area decreases, likely causing insufficient activity.

Furthermore, in the hydrocracking catalyst A, it is preferable that the ratio of the pore volume derived from pores having a pore diameter of 3 nm or less to the total pore volume is 35% by volume or less for maintaining effective catalyst pores and achieving sufficient activities.

When the hydrocracking catalyst A is used, the conditions for hydrocracking are set to, for examples, a hydrogen pressure of 2 to 20 MPa, a liquid hourly space velocity (LHSV) of 0.1 to 3.0 $h^{-1}$, and a hydrogen oil ratio (hydrogen/oil ratio) of 150 to 1500 $Nm^3/m^3$, preferably a hydrogen pressure of 5 to 18 MPa, a liquid hourly space velocity of 0.3 to 1.5 $h^{-1}$, and a hydrogen oil ratio (hydrogen/oil ratio) of 380 to 1200 $Nm^3/m^3$, more preferably a hydrogen pressure of 8 to 15 MPa, a liquid hourly space velocity of 0.3 to 1.5 $h^{-1}$, and a hydrogen oil ratio of 350 to 1000 $Nm^3/m^3$. These conditions are the factors which determine the reaction activity, and, for example, when the hydrogen pressure and the hydrogen oil ratio are below the lower limits described above, the reactivity tends to decrease and the catalytic activity is likely to rapidly drop. On the other hand, when the hydrogen pressure and the hydrogen oil ratio exceed the upper limits described above, an excessive investment in equipment such as a compressor is likely to be required. Further, the lower the liquid hourly space velocity tends to be more advantageous to the reaction but when it is below the lower limit values described above, a reactor having an extremely large internal volume is required and an excessive investment in equipment tends to be required, whereas when the liquid hourly space velocity exceeds the upper limit values described above, the reaction is likely not to sufficiently proceed. Furthermore, examples of the reaction temperature include 180 to 450°C, preferably 250 to 420°C, more preferably 280 to 410°C, and particularly preferably 300 to 400°C. When a reaction temperature exceeds 450°C, not only does the yield of the base oil fraction decrease due to the proceeding cracking into a light fraction, but the product is colored and hence tends to have a limited use as a base material for a final product. On the other hand, when a reaction temperature is below 180°C, progress of the hydrocracking reaction is suppressed, sometimes getting harder to achieve a crack per mass of the heavy matter of 5 to 30% by mass.

(Second step)

The second step is a step of obtaining a base oil for lubricant oils from the hydrocracked oil obtained in the first step. In the second step, a base oil for lubricant oils can be obtained through processing of the hydrocracked oil depending on the form of the production apparatus used, desired characteristics of the base oil for lubricant oils, and the like.

In one aspect, the second step may comprise a step of obtaining a dewaxed oil by hydroisomerization dewaxing the hydrocracked oil (dewaxing step (A-1)), and may further comprise a step of obtaining a hydrorefined oil by hydrorefining the dewaxed oil (hydrorefining step (A-2)) and a step of obtaining the base oil for lubricant oils by distilling the hydrorefined oil (distillation step (A-3)).

The second step according to the present aspect will be described below in detail.

<Dewaxing step (A-1)>

The dewaxing step (A-1) is a step of obtaining a dewaxed oil through hydroisomerization dewaxing of the hydrocracked oil obtained in the first step. The hydrocracked oil subjected to the dewaxing step (A-1) comprises the heavy matter and a hydrocracked product thereof. In the first step, light fractions, such as gas, naphtha and kerosene, may occur due to hydrocracking of the heavy matter, and the hydrocracked oil subjected to the dewaxing step (A-1) may comprise these light fractions, or these light fractions may be removed.

In the dewaxing step (A-1), the hydroisomerization dewaxing can be carried out, for example, in the presence of hydrogen, by allowing the hydrocracked oil to contact a hydroisomerization catalyst. For the hydroisomerization dewaxing catalyst, for example, a catalyst routinely used for hydroisomerization, more specifically, a catalyst supporting a metal having the hydrogenolysis activity on an inorganic carrier can be used.

The metal having the hydrogenolysis activity in the hydroisomerization dewaxing catalyst used is, for example, at least 1 metal selected from the group consisting of the metals belonging to the Group 6, Group 8, Group 9 and Group 10 of the periodic table. Specific examples of these metals include noble metals such as platinum, palladium, rhodium, ruthenium, iridium, osmium, and the like, or cobalt, nickel, molybdenum, tungsten, iron, and the like, with platinum, palladium, nickel, cobalt, molybdenum and tungsten being preferable, and platinum and palladium being further preferable. A plurality of these metals are preferably used in combination, and, in that case, examples of the preferable combination include platinum-palladium, cobalt-molybdenum, nickel-molybdenum, nickel-cobalt-molybdenum, nickel-tungsten, or the like.

Examples of the inorganic carrier composing the hydroisomerization dewaxing catalyst include metal oxides such as alumina, silica, titania, zirconia, boria, and the like. These metal oxides may be used singly or in a mixture of two or more, or as a complex metal oxide such as silica alumina, silica zirconia, alumina zirconia, alumina boria, and the like. The above inorganic carrier are preferably, in the light of effectively proceeding the hydroisomerization of normal paraffin, a complex metal oxide having solid acidity such as silica alumina, silica zirconia, alumina zirconia, alumina boria, and the like. Further, the inorganic carrier may contain a small amount of zeolite. Furthermore, the inorganic carrier may contain a binder for the purpose of improving the moldability and mechanical strengths of the carrier. Preferable examples of the binder include alumina, silica, magnesia, and the like.

The content of metal having the hydrogenolysis activity in the hydroisomerization dewaxing catalyst is, when the metal is the above noble metal, preferably about 0.1 to 3% by mass based on the mass of the carrier, in terms of metal atom. When the metal is other than the above noble metals, it is preferred that the content is about 2 to 50% by mass based on the mass of the carrier, in terms of metal oxide. When a content of the metal having the hydrogenolysis activity is below the lower limit value described above, the hydroisomerization is not likely to proceed sufficiently. However, when a content of the metal having the hydrogenolysis activity exceeds the upper limit value described above, the dispersion of metal having the hydrogenolysis activity reduces, causing the reduction of catalyst activity thereby raising the catalyst cost.

The hydroisomerization dewaxing catalyst may also be a catalyst which comprises at least 1 metal selected from the elements belonging to the Group 6, Group 8, Group 9 and Group 10 of the periodic table supported on a carrier comprising a porous inorganic oxide composed of substances selected from aluminium, silicon, zirconium, boron, titanium, magnesium and zeolite.

Preferable examples of the porous inorganic oxide used as the carrier for the hydroisomerization dewaxing catalyst include alumina, titania, zirconia, boria, silica and zeolite, and, of these, those composed of alumina and at least one of titania, zirconia, boria, silica and zeolite. The production method thereof is not particularly limited and any preparation methods using a feedstock in the state of a variety of sols and salt compounds compatible with respective element can be employed. Additionally, a complex hydroxide or a complex oxide such as silica alumina, silica zirconia, alumina titania, silica titania, alumina boria, or the like, is first prepared and subsequently added in the form of alumina gel or other hydroxides or a suitable solution for the preparation at any step during the preparation process. The ratio of alumina and other oxides can be any ratio with respect to the carrier, but is preferably 90% by mass or less, more preferably 60% by mass or less, further preferably 40% by mass or less, preferably 10% by mass or more, and more preferably 20% by mass or more, of alumina.

Zeolite is a crystalline aluminosilicate and examples include faujasite, pentasil, mordenite, TON, MTT, *MRE, and the like, and those super-stabilized by a predetermined hydrothermal treatment and/or acid treatment or those containing an adjusted alumina content in zeolite can be used. Faujasite and mordenite are preferably used, and the Y-type and beta-type are particularly preferably used. The super-stabilized Y-type is preferred. The super-stabilized zeolite by the hydrothermal treatment have new pores ranging from more than 20 Å to 100 Å or less formed, in addition to the intrinsic pore structure referred to as the micropore of 20 Å or less. The hydrothermal treatment can employ the known conditions.

Examples of the active metal for hydroisomerization dewaxing catalyst usable include at least 1 metal selected from the element belonging to the Group 6, Group 8, Group 9 and Group 10 of the periodic table. Of these metals, at least 1 metal selected from Pd, Pt, Rh, Ir and Ni is preferably used, and the combined use thereof is more preferable. Examples of the preferable combination include Pd-Pt, Pd-Ir, Pd-Rh, Pd-Ni, Pt-Rh, Pt-Ir, Pt-Ni, Rh-Ir, Rh-Ni, Ir-Ni, Pd-Pt-Rh, Pd-Pt-Ir, Pt-Pd-Ni, and the like. Of these, the combinations of Pd-Pt, Pd-Ni, Pt-Ni, Pd-Ir, Pt-Rh, Pt-Ir, Rh-Ir, Pd-Pt-Rh, Pd-Pt-Ni and Pd-Pt-Ir are more preferable, and the combinations of Pd-Pt, Pd-Ni, Pt-Ni, Pd-Ir, Pt-Ir, Ni Pd-Pt-Ni and Pd-Pt-Ir are further preferable.

The total content of the active metal based on the catalyst mass is preferably 0.1 to 2% by mass, more preferably 0.2 to 1.5% by mass, and further preferably 0.25 to 1.3% by mass, in terms of metal. When the total amount of metal supported is below 0.1% by mass, the active sites are reduced and the sufficient activity tends not to be obtained. Conversely, when such an amount exceeds 2% by mass, the metals are not effectively dispersed and the sufficient activity tends not to be obtained.

In any of the above hydroisomerization dewaxing catalysts, the method for supporting the active metal on the carrier is not particularly limited, and the known method routinely used for producing the hydroisomerization dewaxing catalyst is employed. Typically, the method in which a catalyst carrier is impregnated with a solution containing a salt of the active metal is preferably employed. Equilibrium adsorption method, pore-filling method, incipient-wetness method, or the like, is also preferably employed. For example, the pore-filling method is a method in which the pore volume of the carrier is measured in advance and the carrier is impregnated with a metal salt solution in a volume equivalent to the volume as the measured volume, however, the impregnation method is not particularly limited and the impregnation can be carried out by a suitable method in accordance with the amount of metal supported and the physical properties of catalyst carrier.

For the hydroisomerization dewaxing catalyst, the following catalysts can also be used.

[A specific aspect of the hydroisomerization dewaxing catalyst]

The hydroisomerization dewaxing catalyst of the present aspect is produced by a specific method, by which the distinctive features thereof are imparted. Hereinafter, the hydroisomerization dewaxing catalyst of the present aspect is described with reference to preferred aspects of the production thereof.

The method for producing the hydroisomerization dewaxing catalyst of the present aspect comprises a step (1) of heating at a temperature of 250 to 350°C under $N_2$ atmosphere a mixture, which contains a binder and an ion-exchanged zeolite obtained by ion exchanging an organic template-containing zeolite containing an organic template and having a 10-membered ring one dimensional pore structure, in a solution containing ammonium ions and/or protons, to obtain a carrier precursor, and a step (2) of calcining a catalyst precursor, wherein the carrier precursor is impregnated with platinum salt and/or palladium salt, in an atmosphere containing molecular oxygen at a temperature of 350 to 400°C, to obtain a hydroisomerization dewaxing catalyst in which platinum and/or palladium is supported on a zeolite-containing carrier.

The organic template-containing zeolite used in the present aspect has a one dimensional pore structure made of a 10-membered ring, in view of achieving a high level of both high isomerization activity and suppressed cracking activity in the hydroisomerization reaction of a normal paraffin. Examples of such a zeolite include AEL, EUO, FER, HEU, MEL, MFI, NES, TON, MTT, WEI, *MRE and SSZ-32. Note that each of the above three alphabetical letters stands for the skeletal structure code assigned to each structure of the classified molecular sieve type zeolites by The Structure Commission of The International Zeolite Association. In addition, the zeolites having the same topology are collectively referred by the same code.

The organic template-containing zeolite described above are, among the zeolites having the 10-membered ring one dimensional pore structure, preferably the zeolites having the TON or MTT structure, ZSM-48 zeolite and SSZ-32 zeolite having the *MRE structure, in view of the high isomerization activity and low cracking activity. The zeolite having the TON structure is preferably ZSM-22 zeolite, and the zeolite having the MTT structure is preferably ZSM-23 zeolite.

The organic template-containing zeolite is hydrothermally synthesized by a known method from a silica source, an alumina source and an organic template, which is added to build the above predetermined pore structure.

The organic template is an organic compound having an amino group, an ammonium group, and the like, and is selected in accordance with the structure of the zeolite to be synthesized but an amine derivative is preferable. More specifically, the organic template is preferably at least one selected from the group consisting of alkylamine, alkyldiamine, alkyltriamine, alkyltetramine, pyrrolidine, piperazine, aminopiperazine, alkylpentamine, alkylhexamine, and the derivatives thereof. Examples of the number of carbon atoms in the above alkyls include 4 to 10, with 6 to 8 being preferable. Note that examples of the representative alkyldiamine include 1,6-hexadiamine and 1 ,8-diaminooctane.

The molar ratio of the silicon element to aluminium element ([Si]/[Al]) (hereinafter referred to as the "Si/Al ratio") composing the organic template-containing zeolite having a 10-membered ring one dimensional pore structure is preferably 10 to 400, and more preferably 20 to 350. When an Si/Al ratio is below 10, the activity to the conversion of normal paraffins increases, whereas the isomerization selectivity to isoparaffins decreases, and the cracking reactions caused by an increase in the reaction temperature tend to abruptly increase, hence not preferable. On the other hand, when an Si/Al ratio exceeds 400, the catalytic activity required for the conversion of normal paraffins becomes difficult to obtain, hence not preferable.

The above organic template-containing zeolite, which is synthesized, preferably washed and dried, typically has alkali metal cations as counter cations, and incorporates the organic template in the pore structure. The organic template-containing zeolite used for producing the hydroisomerization dewaxing catalyst according to the present aspect is preferably in such a synthesized state, that is, the zeolite has not been subjected to a calcining treatment for removing the organic template incorporated therein.

The above organic template-containing zeolite is subsequently ion exchanged in a solution containing ammonium ions and/or protons. By the ion exchange, the counter cations contained in the organic template-containing zeolite are exchanged for ammonium ions and/or protons. Further, at the same time, a part of the organic template incorporated in the organic template-containing zeolite is removed.

The solution used for the above ion exchange treatment is preferably a solution which uses a solvent containing at least 50% by volume of water, and more preferably is an aqueous solution. Examples of the compounds for supplying ammonium ions into the solution include various inorganic and organic ammonium salts such as ammonium chloride, ammonium sulfate, ammonium nitrate, ammonium phosphate, and ammonium acetate. On the other hand, mineral acids such as hydrochloric acid, sulfuric acid and nitric acid are typically used as compounds for supplying protons into the solution. The ion-exchanged zeolite (herein, ammonium form zeolite) obtained by ion exchange of the organic template-containing zeolite in the presence of ammonium ions releases ammonia during subsequent calcination, whereby converting the counter cations into protons to form Bronsted acid sites. Ammonium ions are preferable as the cationic species for the ion exchange. The content of ammonium ions and/or protons in the solution is preferably set to be 10 to 1000 equivalents based on the total amount of counter cations and organic template contained in the organic template-containing zeolite used.

The ion exchange treatment may be carried out on the organic template-containing zeolite simple substrate in powder form, or alternatively prior to the ion exchange treatment, the organic template-containing zeolite may be blended with an inorganic oxide, which is a binder, and molded, and the ion exchange treatment may be carried out on the obtained molded product. However, when the molded product is subjected to the ion exchange treatment in an uncalcined state, problems such as disintegration and powdering of the molded product are likely to occur. For this reason, it is preferred to subject the organic template-containing zeolite in powder form to the ion exchange treatment.

The ion exchange treatment is preferably carried out based on a standard method, i.e., a method in which the organic template-containing zeolite is immersed in a solution, preferably an aqueous solution, containing ammonium ions and/or protons, followed by stirring or fluidizing. Further, the above stirring or fluidization is preferably carried out with heating to enhance the ion exchange efficiency. In the present aspect, a method in which the above aqueous solution is heated, boiled and ion exchanged under reflux is particularly preferable.

Further, in view of enhancing the ion exchange efficiency, it is preferred to exchange the solution with a fresh solution once or twice or more, and more preferably exchange the solution with a fresh solution once or twice, during the ion exchange of the zeolite in a solution. When exchanging the solution once, the ion exchange efficiency can be enhanced by, for example, immersing the organic template-containing zeolite in a solution containing ammonium ions and/or protons, and heating the solution under reflux for 1 to 6 hours, followed by exchanging the solution with a fresh solution, and further heating under reflux for 6 to 12 hours.

By the ion exchange treatment, substantially all of the counter cations such as alkali metal in the zeolite can be exchanged for ammonium ions and/or protons. On the other hand, as to the organic template incorporated in the zeolite, a part of the organic template is removed by the above ion exchange treatment, but it is generally difficult to remove all of the organic template even when the same treatment is repeatedly carried out and consequently a part thereof remains inside the zeolite.

In the present aspect, a carrier precursor is obtained by heating a mixture, in which the ion-exchanged zeolite and the binder are included, in a nitrogen atmosphere at a temperature of 250 to 350°C.

The mixture, in which the ion-exchanged zeolite and the binder are included, is preferably obtained by blending an inorganic oxide, which is a binder, with the ion-exchanged zeolite obtained by the method described above and molding the obtained composition. The purpose of blending an inorganic oxide with the ion-exchanged zeolite is to increase the mechanical strengths of the carrier (particularly, a particulate carrier) obtained by calcining the molded product to a degree which can withstand practical application, but the present inventors found that the selection of the type of inorganic oxide affects the isomerization selectivity of the hydroisomerization dewaxing catalyst. From this perspective, at least one inorganic oxide selected from alumina, silica, titania, boria, zirconia, magnesia, ceria, zinc oxide, phosphorus oxide, and composite oxides containing a combination of 2 or more of these oxides can be used as the inorganic oxide as described above. Among the above, silica and alumina are preferred, with alumina being more preferred, from a view of further enhancing the isomerization selectivity of the hydroisomerization dewaxing catalyst. The above "composite oxide containing a combination of 2 or more of these oxides" refers to a composite oxide containing at least 2 components from alumina, silica, titania, boria, zirconia, magnesia, ceria, zinc oxide, and phosphorus oxide, but is preferably an alumina-based composite oxide containing 50% by mass or more of an alumina component based on the composite oxide, with alumina-silica being more preferable among those.

The blending ratio of the ion-exchanged zeolite and the inorganic oxide in the above composition is preferably 10:90 to 90:10, and more preferably 30:70 to 85:15, in terms of the mass ratio of the ion-exchanged zeolite : the inorganic oxide. When this ratio is less than 10:90, the activity of the hydroisomerization dewaxing catalyst tends to be insufficient, hence not preferable. Conversely, when the above ratio exceeds 90:10, the mechanical strength of the carrier obtained by molding and calcining the composition tends to be insufficient, hence not preferable.

The method for blending the inorganic oxide with the ion-exchanged zeolite is not particularly limited, but a general method can be employed, such as, for example, a method in which a suitable amount of a liquid such as water is added to the powders of both components to form a viscous fluid, and the fluid is kneaded in a kneader, or the like.

The composition containing the ion-exchanged zeolite and the inorganic oxide, or a viscous fluid including the composition, is molded by a method such as extrusion molding, and is preferably dried, to form a particulate molded product. The shape of the molded product is not particularly limited, and examples include a cylindrical shape, a pellet shape, a spherical shape, and an irregular tubular shape having a three leaf shaped or a four leaf shaped cross-section. The size of the molded product is not particularly limited, but is preferably, for example, about 1 to 30 mm in the long axis and about 1 to 20 mm in the short axis, from the perspective of the ease of handling, the load density in the reactor, and the like.

In the present aspect, it is preferred to form the carrier precursor by sufficiently drying the thus-obtained molded product at 100°C or less and subsequently heating in an $N_2$ atmosphere at a temperature of 250 to 350°C. The heating time is preferably 0.5 to 10 hours, and more preferably 1 to 5 hours.

In the present aspect, when the above heating temperature is less than 250°C, a large amount of the organic template remains and the zeolite pores become blocked with the remained template. The isomerization active sites are thought to exist near the pore mouth, and in the above case, the reaction substrate cannot disperse into the pores due to the pore blockage, so that the active sites become covered, the isomerization reaction does not easily proceed, and a normal paraffin conversion rate tends not to be sufficiently achieved. On the other hand, when the heating temperature exceeds 350°C, the isomerization selectivity of the obtained hydroisomerization dewaxing catalyst does not improve sufficiently.

The lower limit temperature at the time of heating the molded product to prepare the carrier precursor is preferably 280°C or more. Further, the upper limit temperature is preferably 330°C or less.

In the present aspect, it is preferred to heat the above mixture so that a part of the organic template included in the molded product remains. Specifically, it is preferred to set the heating conditions so that the carbon content of the hydroisomerization dewaxing catalyst obtained by calcining after the metal supporting to be described later is 0.4 to 3.5% by mass (preferably 0.4 to 3.0% by mass, more preferably 0.4 to 2.5% by mass, and further preferably 0.4 to 1.5% by mass), or the micropore volume per unit mass of the catalyst is 0.02 to 0.12 ml/g and the micropore volume per unit mass of the zeolite contained in the catalyst is 0.01 to 0.12 ml/g.

Next, the catalyst precursor incorporating a platinum salt and/or palladium salt in the above carrier precursor is calcined in an atmosphere containing molecular oxygen at a temperature of 250 to 400°C, preferably 280 to 400°C, and more preferably 300 to 400°C, to obtain a hydroisomerization dewaxing catalyst in which platinum and/or palladium is supported on a zeolite-containing carrier. Note that the term "in an atmosphere containing molecular oxygen" means a contact with a gas including an oxygen gas, preferably with air. The calcining time is preferably 0.5 to 10 hours, and more preferably 1 to 5 hours.

Examples of the platinum salt include chloroplatinic acid, tetraammineplatinum dinitrate, dinitroaminoplatinum, and tetraamminedichloroplatinum. Since chloride salts can produce hydrochloric acid during a reaction, which may cause apparatus corrosion, tetraammineplatinum dinitrate, which is a platinum salt that is not a chloride salt and in which a high level of platinum is dispersed, is preferred.

Examples of the palladium salt include palladium chloride, tetraammine palladium nitrate, and diaminopalladium nitrate. Since chloride salts can produce hydrochloric acid during a reaction, which may cause apparatus corrosion, tetraammine palladium nitrate, which is a palladium salt that is not a chloride salt and in which a high level of palladium is dispersed, is preferred.

The amount of the active metal supported on the carrier including zeolite according to the present aspect is preferably 0.001 to 20% by mass, and more preferably 0.01 to 5% by mass, based on the mass of the carrier. When the amount supported is below 0.001% by mass, it is difficult to impart a predetermined hydrogenation/dehydrogenation functions. Conversely, when the amount supported exceeds 20% by mass, conversion on the active metal of hydrocarbons into lighter products by cracking tends to easily proceed, so that the yield of the intended fraction tends to decrease, and further the catalyst costs tend to increase, hence not preferable.

Further, when the hydroisomerization dewaxing catalyst according to the present aspect is used for hydroisomerization of a hydrocarbon oil containing a large amount of sulfur-containing compounds and/or nitrogen-containing compounds, from the perspective of the durability of catalytic activity, it is preferred to include, as the active metals, a combination of nickel-cobalt, nickel-molybdenum, cobalt-molybdenum, nickel-molybdenum-cobalt, nickel-tungsten-cobalt, or the like. The amount of these metals supported is 0.001 to 50% by mass, and more preferably 0.01 to 30% by mass, based on the mass of the carrier.

In the present aspect, it is preferred to calcine the above catalyst precursor so that the organic template remaining in the carrier precursor remains. Specifically, it is preferred to set the heating conditions so that the carbon content of the obtained hydroisomerization dewaxing catalyst is 0.4 to 3.5% by mass (preferably 0.4 to 3.0% by mass, more preferably 0.4 to 2.5% by mass, and further preferably 0.4 to 1.5% by mass), or the micropore volume per unit mass of the obtained hydroisomerization dewaxing catalyst is 0.02 to 0.12 ml/g, and the micropore volume per unit mass of the zeolite contained in the catalyst is 0.01 to 0.12 ml/g.

Note that, in the present specification, the carbon content of the hydroisomerization dewaxing catalyst can be analyzed by a combustion in oxygen airflow - infrared absorption method. Specifically, using a carbon/sulfur analyzer (e.g., EMIA-920V, manufactured by HORIBA, Ltd.), the catalyst is combusted in an oxygen airflow and a carbon content is determined by quantification by an infrared absorption method.

The micropore volume per unit mass of the hydroisomerization dewaxing catalyst is calculated by a method called nitrogen adsorption measurement. Namely, for the catalyst, the micropore volume per unit mass of the catalyst is calculated by analyzing a physical adsorption and desorption isotherm of nitrogen measured at the temperature of liquid nitrogen (-196°C), specifically, analyzing an adsorption isotherm of nitrogen measured at the temperature of liquid nitrogen (-196°C) by a t-plot method. Further, the micropore volume per unit mass of the zeolite contained in the catalyst is also calculated by the above nitrogen adsorption measurement.

A micropore volume $V_z$ per unit mass of the zeolite contained in the catalyst can be calculated, for example, when the binder does not have a micropore volume, by the following formula from a value $V_c$ of the micropore volume per unit mass of the hydroisomerization dewaxing catalyst and the content percentage Mz (% by mass) of zeolite in the catalyst.

$$V_Z = V_c / M_z \times 100$$

It is preferred that, subsequent to the above calcination treatment, the hydroisomerization dewaxing catalyst of the present aspect is subjected to a reduction treatment after the catalyst is loaded in the reactor for conducting the hydroisomerization reaction. Specifically, it is preferred that the hydroisomerization dewaxing catalyst is subjected to the hydrogen reduction treatment for about 0.5 to 10 hours in an atmosphere containing molecular hydrogen, and preferably under a stream of hydrogen gas, preferably at 250 to 500°C, and more preferably 300 to 400°C. By performing this step, it can be further ensured that high activity for the dewaxing of the hydrocarbon oil can be imparted to the catalyst.

The hydroisomerization dewaxing catalyst according to the present aspect includes a carrier containing a zeolite having a 10-membered ring one dimensional pore structure, and a binder, and platinum and/or palladium supported on the carrier. In addition, the hydroisomerization dewaxing catalyst according to the present aspect is a catalyst, in which a carbon content is 0.4 to 3.5% by mass. Further, the hydroisomerization dewaxing catalyst of the present aspect is a hydroisomerization dewaxing catalyst having a micropore volume per unit mass of 0.02 to 0.12 ml/g, wherein the above zeolite derives from an ion-exchanged zeolite obtained by ion exchanging an organic template-containing zeolite containing an organic template and having a 10-membered ring one dimensional pore structure in a solution containing ammonium ions and/or protons and the micropore volume per unit mass of the zeolite contained in the catalyst may be 0.01 to 0.12 ml/g.

The hydroisomerization dewaxing catalyst of the present aspect can be produced by the method described above. The carbon content of the catalyst, the micropore volume per unit mass of the catalyst, and the micropore volume per unit mass of the zeolite contained in the catalyst can be set to be within the above-described ranges by appropriately adjusting the amount of ion-exchanged zeolite blended in the mixture including the ion-exchanged zeolite and a binder, the heating conditions of the mixture in an $N_2$ atmosphere, and the heating conditions of the catalyst precursor in the atmosphere containing molecular oxygen.

Hereinabove, one specific aspect of the hydroisomerization dewaxing catalyst has been described, but the catalyst used for the hydroisomerization dewaxing in the second step according to the present embodiment is not particularly limited to this.

Next, reaction conditions for the dewaxing step (A-1) will be described below in detail.

In the dewaxing step (A-1), the reaction temperature of the hydroisomerization dewaxing is preferably 200 to 450°C, and more preferably 280 to 400°C. When the reaction temperature is less than 200°C., the isomerization of the normal paraffins contained in the hydrocracked oil does not easily proceed, so that the reduction and removal of the wax component tend to be insufficient. Conversely, when the reaction temperature exceeds 450°C, cracking is significant, so that the yield of the base oil for lubricant oils tends to decrease.

The reaction pressure of the hydroisomerization dewaxing is preferably 0.1 to 20 MPa, and more preferably 0.5 to 10 MPa. When the reaction pressure is less than 0.1 MPa, catalyst degradation due to the formation of coke tends to be accelerated. Conversely, when the reaction pressure exceeds 20 MPa, construction costs for the apparatus increase, so that it tends to become difficult to realize an economical process.

In the hydroisomerization dewaxing, the liquid hourly space velocity of the hydrocracked oil based on the catalyst is preferably 0.01 to 100 $h^{-1}$, and more preferably 0.1 to 50 $h^{-1}$. When the liquid hourly space velocity is below 0.01 $h^{-1}$, the cracking tends to proceed excessively, so that production efficiency tends to decrease. Conversely, when the liquid hourly space velocity exceeds 100 $h^{-1}$, the isomerization of the normal paraffins does not proceed easily, so that the reduction and removal of the wax component tend to be insufficient.

The supply ratio of hydrogen to hydrocracked oil in the hydroisomerization dewaxing is preferably 100 to 1500 $Nm^3/m^3$, and more preferably 200 to 800 $Nm^3/m^3$. When the supply ratio is below 100 $Nm^3/m^3$, for example, in the case where the base oil fraction contains sulfur or nitrogen, hydrogen sulfide or ammonia gas produced by desulfurization or denitrification reactions that accompany the isomerization reaction adsorb onto and poison the active metal on the catalyst, which tends to make it difficult to achieve a predetermined catalytic performance. Conversely, when the supply ratio exceeds 1000 $Nm^3/m^3$, hydrogen supply equipment having an increased capacity is required, which tends to make it difficult to realize an economical process.

The dewaxed oil obtained in the dewaxing step (A-1) has a normal paraffin concentration of preferably 10% by volume or less, and more preferably 1% by volume or less.

The dewaxed oil obtained in the dewaxing step (A-1) can be suitably used as the feedstock for the base oil for lubricant oils. In the present embodiment, the base oil for lubricant oils can be obtained through, for example, a step of hydrorefining the dewaxed oil obtained in the dewaxing step (A-1) to obtain a hydrorefined oil (hydrorefining step (A-2)), and a distillation step of distilling the hydrorefined oil to obtain a base oil for lubricant oils (A-3).

<Hydrorefining step (A-2)>

The hydrorefining step (A-2) is a step of hydrorefining the dewaxed oil obtained in the dewaxing step (A-1) to obtain a hydrorefined oil. By hydrorefining, for example, olefin and aromatic compounds in the dewaxed oil are hydrogenated, and the oxidation stability and a hue of a base oil for lubricant oils are improved. Further, the reduction of sulfur due to the hydrogenation of the sulfur compound in the dewaxed oil is expected.

The hydrorefining can be carried out by, in the presence of hydrogen, allowing the dewaxed oil to contact a hydrorefining catalyst. Examples of the hydrorefining catalyst include catalysts that comprise a carrier composed of one or more inorganic solid acidic substances selected from alumina, silica, zirconia, titania, boria, magnesia, and phosphorus, and one or more active metals, supported on the carrier, selected from the group consisting of platinum, palladium, nickel-molybdenum, nickel-tungsten, and nickel-cobalt-molybdenum.

Examples of a preferred carrier in hydrorefining catalyst include an inorganic solid acidic substance that includes at least two or more of alumina, silica, zirconia, and titania. As the method for supporting the above active metals on the carrier, a conventional method such as impregnation or ion exchange may be employed.

The amount of the active metals supported in the hydrorefining catalyst is preferably such that the total amount of metal is 0.1 to 25% by mass relative to the carrier.

The average pore size of the hydrorefining catalyst is preferably 6 to 60 nm, and more preferably 7 to 30 nm. When the average pore size is less than 6 nm, a sufficient catalytic activity tends not to be obtained, whereas when the average pore size exceeds 60 nm, catalytic activity tends to decrease due to a decrease in the level of dispersion of the active metals.

It is preferred that the pore volume of the hydrorefining catalyst is 0.2 mL/g or more. If the pore volume is less than 0.2 mL/g, the activity degradation of the catalyst tends to occur earlier. Note that the pore volume of the hydrorefining catalyst may be, for example, 0.5 mL/g or less. In addition, it is preferred that the specific surface area of the hydrorefining catalyst is 200 $m^2/g$ or more. When the specific surface area of the catalyst is less than 200 $m^2/g$, the dispersibility of the active metals is insufficient, so that the activity tends to decrease. Note that the specific surface area of the hydrorefining catalyst may be, for example, 400 $m^2/g$ or less. The pore volume and the specific surface area of the catalyst can be measured and calculated by a method referred to BET method using nitrogen adsorption.

It is preferred that the reaction conditions for the hydrorefining are set to, for example, a reaction temperature of 200 to 300°C, a partial pressure of hydrogen of 3 to 20 MPa, an LHSV of 0.5 to 5 $h^{-1}$, and a hydrogen/oil ratio of 170 to 850 $Nm^3/m^3$, and more preferred are a reaction temperature of 200°C to 300°C, a partial pressure of hydrogen of 4 to 18 MPa, an LHSV of 0.5 to 4 $h^{-1}$, and a hydrogen/oil ratio of 340 to 850 $Nm^3/m^3$.

In the present aspect, it is preferred to adjust the reaction conditions of the hydrorefining so that sulfur and nitrogen in the hydrorefined oil is 5 ppm by mass or less and 1 ppm by mass or less, respectively. Note that sulfur is a value to be measured in conformity with JIS K2541 "Crude oil and petroleum products - Determination of sulfur content" and nitrogen is a value to be measured in conformity with JIS K2609 "Crude oil and petroleum products - Determination of nitrogen content".

<Distillation step (A-3)>

The distillation step (A-3) is a step of fractionating the hydrorefined oil obtained in the hydrorefining step (A-2) into a plurality of fractions to obtain at least one base oil for lubricant oils.

The distillation conditions in the distillation step (A-3) are not particularly limited as long as the conditions enable the fractionation of the hydrorefined oil into the base oil for lubricant oils. For example, it is preferred that the distillation step (A-3) be carried out by atmospheric distillation (or distillation under applied pressure) for distilling away the light fraction from the hydrorefined oil, and vacuum distillation for fractionating the bottom oil of the atmospheric distillation into the base oil for lubricant oils.

In the distillation step (A-3), for example, several lubricant oil fractions are obtained by setting a plurality of cut points and performing vacuum distillation of the bottom oil. In the distillation step (A-3), for example, the hydrorefined oil can be fractionated into the first lubricant oil fraction having a 10% by volume distillation temperature of 280°C or more and a 90% by volume distillation temperature of 390°C or less, the second lubricant oil fraction having a 10% by volume distillation temperature of 390°C or more and a 90% by volume distillation temperature of 490°C or less, and the third lubricant oil fraction having a 10% by volume distillation temperature of 490°C or more and a 90% by volume distillation temperature of 530°C or less, which are collected.

The first lubricant oil fraction can be obtained to be the base oil for lubricant oil suitable for an ATF and a shock absorber, and in this case, it is preferred that the desired value be set to be a kinematic viscosity at 100°C of 2.7 $mm^2/s$. The second lubricant oil fraction can be obtained as the base oil for lubricant oils of the present invention suitable to be the base oil for engine oils satisfying the API Groups III standard, and in this case, it is preferred that the fraction have a kinematic viscosity at 100°C 3.5 $mm^2/s$ or more and 4.5 $mm^2/s$ or less, and a pour point of -17.5°C or less, when a kinematic viscosity at 100°C of 4.0 $mm^2/s$ is set to be the desired value. The third lubricant oil fraction is the base oil for engine oils which satisfies the API Groups III standard, and can be obtained to be a base oil for lubricant oil suitable, for example, for a diesel engine, and in this case, it is preferred that, when a value higher than a kinematic viscosity at 40°C of 32 $mm^2/s$ is set to be desirable, a kinematic viscosity at 100°C be a value higher than 6.0 $mm^2/s$. Note that, in the present specification, the kinematic viscosities and the viscosity indexes at 40°C or 100°C are the values determined in conformity with JIS K2283 "Crude oil and petroleum products - Determination of kinematic viscosity and calculation of viscosity index from kinematic viscosity."

Note that the first lubricant oil fraction can be obtained as a base oil for lubricant oils equivalent to 70 Pale, the second lubricant oil fraction can be obtained as a base oil for lubricant oils equivalent to SAE-10, and the third lubricant oil fraction can be obtained as a base oil for lubricant oils equivalent to SAE-20. Note that the SAE viscosity means the standards stipulated by Society of Automotive Engineers. Further, the API standards are based on the classification of the lubricant oil grades set by API (American Petroleum Institute), and mean Group II (a viscosity index of 80 or more and below 120, and a saturated component of 90% by mass or more, and sulfur content of 0.03% by mass or less), Group III (a viscosity index of 120 or more, and a saturated component of 90% by mass or more, and sulfur content of 0.03% by mass or less). In addition to this, a base oil for lubricant oils having a viscosity index of 130 or more is referred to as Group III+, and sought as a product with high quality more than API standards.

Further, the hydrorefined oil obtained in the hydrorefining step (A-2) includes light fractions such as naphtha and kerosene by-produced by the hydroisomerization and hydrocracking. In the distillation step (A-3), these light fractions may also be collected as fractions having, for example, a 90% by volume distillation temperature of 280°C or less.

Hereinabove, one aspect of the second step has been described, but the second step according to the present embodiment is not particularly limited to the above aspect. For example, in another aspect, the second step may comprise a step of obtaining a base oil fraction comprising the hydrocracked product by distilling the hydrocracked oil (first distillation step (B-1)) and a step of obtaining a dewaxed oil by hydroisomerization dewaxing of the base oil fraction (dewaxing step (B-2)), and may further comprise a step of obtaining a hydrorefined oil by hydrorefining the dewaxed oil (hydrorefining step (B-3)) and a step of obtaining the base oil for lubricant oils by distilling the hydrorefined oil (second distillation step (B-4)). The second step according to this aspect will be described below in detail.

<First distillation step (B-1)>

In the first distillation step (B-1), the base oil fraction comprising the hydrocracked product is fractionated from the hydrocracked oil obtained in the first step. Also, in some cases, the hydrocracked oil may be further fractionated into a light fraction such as gas, naphtha, or kerosene. Moreover, in the first distillation step (B-1), the heavy fraction heavier than the base oil fraction may be further fractionated, and the heavy fraction may be collected as a bottom oil.

The base oil fraction is the fraction for obtaining a base oil for lubricant oils via the dewaxing step (B-2) (and, as necessary, the hydrorefining step (B-3) and the second distillation step (B-4)) to be described later, and the boiling point range thereof can be suitably changed in accordance with an intended product.

The base oil fraction is preferably a fraction having a 10% by volume distillation temperature of 280°C or more and a 90% by volume distillation temperature of 530°C or less. When the base oil fraction is set to be a fraction having a boiling point range of the above range, a useful base oil for lubricant oils can be produced more efficiently. Note that, in the present specification, the 10% by volume distillation temperature and the 90% by volume distillation temperature are the values to be measured in conformity with JIS K2254 "Petroleum products - Determination of distillation characteristics - Gas chromatograph system".

The hydrocracked oil, in some cases, may contain, in addition to the base oil fraction, a fraction of the heavy matter (heavy fraction) having a higher boiling point than the base oil fraction, and a fraction of the light matter (light fraction) having a lower boiling point than the base oil fraction. The light fraction is a fraction having a lower 90% by volume distillation temperature than a 1 0% by volume distillation temperature of the base oil fraction, for example, a fraction having a 90% by volume distillation temperature of lower than 280°C. The heavy fraction is a fraction having a higher 10% by volume distillation temperature than a 90% by volume distillation temperature of the base oil fraction, for example, a fraction having a 10% by volume distillation temperature of higher than 530°C.

The distillation conditions in the first distillation step are not particularly limited as long as the conditions enable the fractionation of the hydrocracked oil into the base oil fraction. For example, the first distillation step may be a step of fractionating the hydrocracked oil into the base oil fraction by vacuum distillation, or may be a step of fractionating the hydrocracked oil into the base oil fraction by atmospheric distillation (or distillation under applied pressure) and vacuum distillation in combination.

For example, when the hydrocracked oil contains a heavy fraction and a light fraction, the first distillation step may be carried out by atmospheric distillation (or distillation under applied pressure) for distilling away the light fraction from the hydrocracked oil, and vacuum distillation for fractionating the bottom oil of the atmospheric distillation into the base oil fraction and the heavy fraction.

In the first distillation step, the base oil fraction may be a single fraction from the fractionation, or may be several fractions from the fractionation in accordance with the intended base oils for lubricant oils. The several lubricant oil fractions from the fractionation can be subjected each independently to the subsequent dewaxing step (B-2). Alternatively, a part or all of the several base oil fractions are mixed and subjected to the subsequent dewaxing step (B-2).

<Dewaxing step (B-2)>

The dewaxing step (B-2) is a step of obtaining a dewaxed oil through hydroisomerization dewaxing of the base oil fraction obtained in the first distillation step. The hydroisomerization dewaxing in the dewaxing step (B-2) can be carried out, for example, in the presence of hydrogen, by allowing the base oil fraction to contact a hydroisomerization catalyst.

Hydroisomerization catalysts and reaction conditions in the hydroisomerization dewaxing of the dewaxing step (B-2) include the same hydroisomerization catalysts and reaction conditions as described in the above dewaxing step (A-1).

The dewaxed oil obtained in the dewaxing step (B-2) has a normal paraffin concentration of preferably 10% by volume or less, and more preferably 1% by volume or less.

The dewaxed oil obtained in the dewaxing step (B-2) can be suitably used as the feedstock for the base oil for lubricant oils. In the present embodiment, the base oil for lubricant oils can be obtained through, for example, a step of hydrorefining the dewaxed oil obtained in the dewaxing step (B-2) to obtain a hydrorefined oil (hydrorefining step (B-3)), and the second distillation step of distilling the hydrorefined oil to obtain a base oil for lubricant oils (B-4).

<Hydrorefining step (B-3)>

The hydrorefining step (B-3) is a step of hydrorefining the dewaxed oil obtained in the dewaxing step (B-2) to obtain a hydrorefined oil. By hydrorefining, for example, olefin and aromatic compounds in the dewaxed oil are hydrogenated, and the oxidation stability and a hue of the base oil for lubricant oils are improved. Further, the reduction of sulfur due to the hydrogenation of the sulfur compound in the dewaxed oil is expected.

The hydrorefining step (B-3) can be carried out, for example, in the presence of hydrogen, by allowing the dewaxed oil to contact a hydrorefining catalyst. Hydrorefining catalysts and reaction conditions for the hydrorefining in the hydrorefining step (B-3) include the same hydrorefining catalysts and reaction conditions as described in the above hydrorefining step (A-2).

In the present aspect, it is preferred to adjust the reaction conditions for the hydrorefining so that sulfur and nitrogen in the hydrorefined oil is 5 ppm by mass or less and 1 ppm by mass or less, respectively. Note that sulfur is a value to be measured in conformity with "Crude petroleum and petroleum products - Determination of sulfur content - Part 6: Ultraviolet fluorescence method" described in JIS K2541-6 and that nitrogen is a value to be measured in conformity with "Crude petroleum and petroleum products - Determination of nitrogen content" described in JIS K2609.

<Second distillation step (B-4)>

The second distillation step (B-4) is a step of fractionating the hydrorefined oil obtained in the hydrorefining step (B-3) to obtain at least one base oil for lubricant oils.

The distillation conditions in the second distillation step (B-4) are not particularly limited as long as the conditions enable the fractionation of the hydrorefined oil into the base oil for lubricant oils. For example, it is preferred that the second distillation step (B-4) be carried out by atmospheric distillation (or distillation under applied pressure) for distilling away the light fraction from the hydrorefined oil, and vacuum distillation for fractionating the bottom oil of the atmospheric distillation into the base oil for lubricant oils.

In the second distillation step (B-4), for example, several lubricant oil fractions can be obtained by setting a plurality of cut points and performing vacuum distillation of the bottom oil. In the second distillation step (B-4), for example, the hydrorefined oil can be fractionated into the first lubricant oil fraction having a 10% by volume distillation temperature of 280°C or more and a 90% by volume distillation temperature of 390°C or less, the second lubricant oil fraction having a 10% by volume distillation temperature of 390°C or more and a 90% by volume distillation temperature of 490°C or less, and the third lubricant oil fraction having a 10% by volume distillation temperature of 490°C or more and a 90% by volume distillation temperature of 530°C or less, which are collected.

The first lubricant oil fraction can be obtained to be the base oil for lubricant oils suitable for an ATF and a shock absorber, and in this case, it is preferred that the desired value be set to be a kinematic viscosity at 100°C of 2.7 $mm^2/s$. The second lubricant oil fraction can be obtained as the base oil for lubricant oils of the present invention suitable to be the base oil for engine oils satisfying the API Group III standard, and in this case, it is preferred that the fraction have a kinematic viscosity at 100°C of 3.5 $mm^2/s$ or more and 4.5 $mm^2/s$ or less, and a pour point of -17.5°C or less, when a kinematic viscosity at 100°C of 4.0 $mm^2/s$ is set to be the desired value. The third lubricant oil fraction is the base oil for engine oils which satisfies the API Groups III standard, and can be obtained to be a base oil for lubricant oils suitable, for example, for a diesel engine, and in this case, it is preferred that, when a value higher than a kinematic viscosity at 40°C of 32 $mm^2/s$ is set to be desirable, a kinematic viscosity at 100°C be a value higher than 6.0 $mm^2/s$. Note that, in the present specification, the kinematic viscosities and the viscosity indexes at 40°C or 100°C are the values determined in conformity with JIS K2283 "Crude petroleum and petroleum products - Determination of kinematic viscosity and calculation of viscosity index from kinematic viscosity."

Note that the first lubricant oil fraction can be obtained as a base oil for lubricant oils equivalent to 70 Pale, the second lubricant oil fraction can be obtained as a base oil for lubricant oils equivalent to SAE-10, and the third lubricant oil fraction can be obtained as a base oil for lubricant oils equivalent to SAE-20. Note that the SAE viscosity means the standards stipulated by Society of Automotive Engineers. Further, the API standards are based on the classification of the lubricant oil grades set by API (American Petroleum Institute), and mean Group II (a viscosity index of 80 or more and below 120, and a saturated component of 90% by mass or more, and sulfur content of 0.03% by mass or less), Group III (a viscosity index of 120 or more, and a saturated component of 90% by mass or more, and sulfur content of 0.03% by mass or less). In addition to this, a base oil for lubricant oils having a viscosity index of 130 or more is referred to as Group III+, and sought as a product with high quality more than API standards.

Further, the hydrorefined oil obtained in the hydrorefining step (B-3) includes light fractions such as naphtha and kerosene by-produced by the hydroisomerization and hydrocracking. In the second distillation step (B-4), these light fractions may also be collected as fractions having, for example, a 90% by volume distillation temperature of 280°C or less.

(Other steps)

The production method according to the present embodiment may further comprise steps other than the first step and the second step described above.

For example, the production method according to the present embodiment may further comprise a step of obtaining the petroleum slack wax subjected to the first step from a high-oil-content slack wax having a content percentage of an oil of greater than 15% by mass (a step of preparing feedstock).

The step of preparing feedstock may be a step of removing at least a part of the oil from the high-oil-content slack wax to obtain the petroleum slack wax having a content percentage of the oil of 15% by mass or less. Removal of the oil may be carried out through, for example, solvent extraction. Solvent extraction may be carried out under, for example, conditions for solvent dewaxing known in the art. More specifically, for example, solvent extraction may be carried out using a mixed solvent of methyl ethyl ketone (MEK), and benzene or toluene under the condition where the solvent/feed oil volume ratio is 0.5 to 5.0 (preferably 1.0 to 4.5) and the extraction temperature is -5 to -45°C (preferably -10 to -40°C).

In addition, the step of preparing feedstock may be a step of mixing the high-oil-content slack wax and a hydrocarbon oil comprising the heavy matter to obtain the petroleum slack wax having a content percentage of the oil of 15% by mass or less.

Next, one embodiment of the present invention is described with reference to the drawing. Figure 1 is a flow diagram showing an example of the apparatus for producing a base oil for lubricant oils to carry out the method for producing a base oil for lubricant oils according to one embodiment.

The apparatus for producing a base oil for lubricant oils 100 shown in Figure 1 is structurally equipped with a first reactor 10 for hydrocracking the petroleum slack wax introduced from a flow channel L1; a first separator 20 for separating under high pressure (distilling away the light fraction under applied pressure) the hydrocracked reactants supplied through a flow channel L2 from the first reactor; a second reactor 30 for hydroisomerization dewaxing the bottom oil (hydrocracked oil) supplied through a flow channel L3 from the first separator 20; a third reactor 40 for hydrorefining the dewaxed oil supplied through a flow channel L7 from the second reactor 30; a second separator 50 for fractionating the hydrorefined oil supplied through a flow channel L8 from the third reactor 40; and a vacuum distillation tower 51 for vacuum distilling the bottom oil supplied through a flow channel L9 from the second separator 50.

A hydrogen gas is supplied through a flow cannel L40 to the first reactor 10, the second reactor 30 and the third reactor 40.

The apparatus for producing a base oil for lubricant oils 100 is provided with a flow channel L31, branched off from the flow channel L40, connecting to the flow channel L1, and the hydrogen gas supplied from the flow channel L31 is mixed with a petroleum slack wax of the feed oil in the flow channel L1 and introduced to the first reactor 10. Further, L32 branched off from the flow channel L40 is connected to the first reactor 10, and the hydrogen pressure and the catalyst bed temperature in the first reactor 10 are adjusted by the supply of the hydrogen gas from the flow channel L32.

The apparatus for producing a base oil for lubricant oils 100 is also provided with a flow channel L33, branched off from a flow channel L40, connecting to the flow channel L5, and the hydrogen gas supplied from the flow channel L33 is mixed with the hydrocracked oil in the flow channel L3 and introduced into the second reactor 30. Further, a flow channel L34 branched off from the flow channel L40 is connected to the second reactor 30, and the hydrogen pressure and the catalyst bed temperature in the second reactor 30 are adjusted by the supply of the hydrogen gas from the flow channel L34.

The apparatus for producing a base oil for lubricant oils 100 is further provided with a flow channel L35, branched off from the flow channel L40, connecting to the flow channel L7, and the hydrogen gas supplied from the flow channel L35 is mixed with the dewaxed oil in the flow channel L7 and introduced to the third reactor 40. Further, a flow channel L36 branched off from the flow channel L40 is connected to the third reactor 40, and the hydrogen pressure and the catalyst bed temperature in the third reactor 40 are adjusted by the supply of the hydrogen gas from the flow channel L36.

Note that the hydrogen gas passed through the second reactor 30 is removed together with the dewaxed oil via the flow channel L7 from the second reactor 30. For this reason, the amount of the hydrogen gas supplied from the flow channel L35 can suitably be adjusted in accordance with the amount of the hydrogen gas removed from the second reactor 30.

The first separator 20 is connected to the flow channel L4 for removing the light fractions and the hydrogen gas from the system to outside. The mixed gas containing the light fractions and the hydrogen gas removed from the flow channel L4 is supplied to a first gas-liquid separator 60 and separated the light fractions from the hydrogen gas. The first gas-liquid separator 60 is connected to a flow channel L21 for removing the light fractions and a flow channel L22 for removing the hydrogen gas.

The second separator 50 is connected to the flow channel L10 for removing the light fractions and the hydrogen gas from the system to outside. The mixed gas containing the light fractions and the hydrogen gas removed from the flow channel L10 is supplied to a second gas-liquid separator 70 and separated the light fractions from the hydrogen gas. The second gas-liquid separator 70 is connected to a flow channel L23 for removing the light fractions and a flow channel L24 for removing the hydrogen gas.

The hydrogen gas removed from the first gas-liquid separator 60 and the second gas-liquid separator 70 is supplied to an acid gas absorption tower 80 through the flow channel L22 and the flow channel L24. The hydrogen gas removed from the first gas-liquid separator 60 and the second gas-liquid separator 70 contains hydrogen sulfide, and the like, which is a hydride of sulfur, and the hydrogen sulfide is removed in the acid gas absorption tower 80. The hydrogen gas from which hydrogen sulfide, and the like, are removed in the acid gas absorption tower 80 is supplied to the flow channel L40 and introduced again to each of the reactors.

The vacuum distillation tower 51 is provided with the flow channels L11, L12 and L13 for removing the lubricant oil fraction from the fractionation in accordance with the intended base oil for lubricant oil from the system to outside.

In the apparatus for producing a base oil for lubricant oils 100, the first step can be carried out by hydrocracking the petroleum slack wax supplied from the flow channel L1 in the first reactor 10. In the first reactor 10, the hydrocracking can be carried out by allowing the petroleum slack wax to contact the hydrocracking catalyst in the presence of hydrogen (molecular hydrogen) supplied from the flow channel L31 and the flow channel L32.

The form of the first reactor 10 is not particularly limited, and a fixed bed reactor filled with the hydrocracking catalyst, for example, is preferably used. Note that, in the apparatus for producing a base oil for lubricant oils 100, the reactor for the hydrocracking is the first reactor 10 alone, but in the present embodiment the apparatus for producing a base oil for lubricant oils may be those wherein a plurality of reactors for hydrocracking are arranged in series or in parallel. Moreover, a catalyst bed in the reactor may be a single bed or a plurality of beds.

In the apparatus for producing a base oil for lubricant oils 100, reactants removed from the first reactor are separated under high pressure with the first separator 20, and then subjected to the second reactor.

In the first separator 20, the hydrocracked reactants supplied from the flow channel L2 is separated under high pressure (fractionated under applied pressure) whereby the light fractions can be removed from the flow channel L4 and the bottom oil (hydrocracked oil) can be removed from the flow channel L3. Further, from the flow channel L2, the hydrogen gas passed through the first reactor 10 together with the hydrocracked reactants is distributed to the first separator 20. In the first separator 20, the hydrogen gas together with the light fractions can be removed from the flow channel L4.

In the apparatus for producing a base oil for lubricant oils 100, the second step can be carried out in such a way as to include the dewaxing step (A-1), hydrorefining step (A-2), and distillation step (A-3).

In the apparatus for producing a base oil for lubricant oils 100, the dewaxing step (A-1) is carried out in the second reactor 30. In the second reactor 30, the hydrocracked oil supplied from the flow channel L3 is allowed to contact the hydroisomerization dewaxing catalyst in the presence of hydrogen (molecular hydrogen) supplied from the flow channel L33 and the flow channel L34. By this operation, the hydrocracked oil is dewaxed by the hydroisomerization.

The form of the second reactor 30 is not particularly limited, and a fixed bed reactor filled with the hydroisomerization dewaxing catalyst, for example, is preferably used. Note that, in the apparatus for producing a base oil for lubricant oils 100, the reactor for the hydroisomerization dewaxing is the second reactor 30 alone, but in the present embodiment the apparatus for producing a base oil for lubricant oils may be those wherein a plurality of reactors for hydroisomerization dewaxing are arranged in series or in parallel. Moreover, the catalyst bed in the reactor may be a single bed or a plurality of beds.

The dewaxed oil obtained via the second reactor 30 is supplied to the third reactor 40 via the flow channel L7 together with the hydrogen gas passed through the second reactor 30.

In the apparatus for producing a base oil for lubricant oils 100, the hydrorefining step (A-2) is carried out in the third reactor 40. In the third reactor 40, the dewaxed oil supplied from the flow channel L7 is allowed to contact the hydrorefining catalyst in the presence of hydrogen (molecular hydrogen) supplied from the flow channel L7, the flow channel 35, and the flow channel L36, whereby the dewaxed oil is hydrorefined.

The form of the third reactor 40 is not particularly limited, and a fixed bed reactor filled with the hydrorefining catalyst, for example, is preferably used. Note that, in the apparatus for producing a base oil for lubricant oils 100, the reactor for the hydrorefining is the third reactor 40 alone, but in the present embodiment the apparatus for producing a base oil for lubricant oils may be those wherein a plurality of reactors for hydrorefining are arranged in series or in parallel. Moreover, the catalyst bed in the reactor may be a single bed or a plurality of beds.

The hydrorefined oil obtained via the third reactor 40 is supplied to the second separator 50 via the flow channel L8 together with the hydrogen gas passed through the third reactor 40.

In the apparatus for producing a base oil for lubricant oils 100, the distillation step (A-3) can be carried out by the second separator 50 and the vacuum distillation tower 51.

In the second separator 50, the hydrorefined oil supplied from the flow channel L8 is separated under high pressure (fractionated under applied pressure) whereby the fraction (e.g., naphtha and fuel oil fractions) lighter than the fraction useful to be a base oil for lubricant oils can be removed from the flow channel L10 and the bottom oil can be removed from the flow channel L9. Further, from the flow channel L8, the hydrogen gas passed through, together with the hydrorefined oil, the third reactor 40 is distributed but in the second separator 50, the hydrogen gas together with the light fractions can be removed from the flow channel L10.

In the vacuum distillation tower 51, the bottom oil supplied from the flow channel L9 is vacuum distillated, whereby the lubricant oil fraction can be removed from the flow channel L11, the flow channel L12 and the flow channel L13, and the lubricant oil fractions removed from each of the flow channels can be preferably used to be the base oil for lubricant oils. Further, in the vacuum distillation tower 51, the fraction lighter than the lubricant oil fraction may be extracted from the flow channel L10' and merged into the flow channel L10.

Note that, in the apparatus for producing a base oil for lubricant oils 100, the distillation step (A-3) is carried out by the second separator 50 and the vacuum distillation tower 51, but can also be carried out by, for example, three or more distillation towers. Further, in the vacuum distillation tower 51, three fractions are removed to be the lubricant oil fractions by the fractionation, but, in the production method according to the present embodiment, a single fraction may be removed as a lubricant oil fraction by the fractionation, and 2 fractions or 4 or more fractions can be removed as lubricant oil fractions by the fractionation.

In the apparatus for producing a base oil for lubricant oils 100, the hydrocracking is carried out in the first reactor 10 so that a crack per mass of the heavy matter is 5 to 30% by mass. At this operation, sulfur contained in the feed oil is hydrogenated and hydrogen sulfide may be produced. More specifically, the hydrogen gas passed through the first reactor 10 may contain hydrogen sulfide.

When the hydrogen gas containing hydrogen sulfide from passing through the first reactor 10 is directly returned back to the flow channel L40, the hydrogen gas containing hydrogen sulfide is supplied to the second reactor 30 and the catalytic activity of the second reactor 30 decreases. For this reason, in the apparatus for producing a base oil for lubricant oils 100, the hydrogen gas passed through the first reactor 10 is supplied to the acid gas absorption tower 80 via the flow channel L2, the first separator 20, the flow channel L4, the first gas-liquid separator 60 and the flow channel L22, hydrogen sulfide is removed at the acid gas absorption tower 80, and subsequently the hydrogen gas is returned to the flow channel L40.

Further, in the apparatus for producing a base oil for lubricant oils 100, the hydrogen gas passed through the second reactor 30 and the third reactor 40 may also sometimes contain hydrogen sulfide produced from sulfur contained in a small amount in the base oil fraction, and thus is supplied to the acid gas absorption tower 80 through the flow channel L24, and subsequently returned to the flow channel L40.

In the apparatus for producing a base oil for lubricant oils 100, the hydrogen gas is circulated via the acid gas absorption tower 80 as described above, but, in the present embodiment, the hydrogen gas does not necessarily need to be circulated and may be each individually supplied to each of the reactors.

Further, the apparatus for producing a base oil for lubricant oils 100 may be provided with a waste water treatment equipment at the previous step or subsequent step of the acid gas absorption tower 80 for removing ammonia, and the like, produced by the hydrogenation of nitrogen contained in the feed oil. Ammonia is treated in the waste water treatment equipment as mixed in the stripping steam, converted to NOx with sulfur at a sulfur recovery and subsequently returned to nitrogen by the denitration reaction.

Hereinabove, one example of the apparatus for producing a base oil for lubricant oils has been described, but the apparatus for producing a base oil for lubricant oils to carry out the method for producing a base oil for lubricant oils according to the present embodiment is not particularly limited to the above.

For example, the apparatus for producing a base oil for lubricant oils may further comprise a vacuum distillation tower for vacuum distilling the bottom oil supplied through a flow channel L3 from the first separator 20, between the first separator 20 and the second separator 30. In such an apparatus for producing a base oil for lubricant oils, a base oil fraction fractionated from the hydrocracked oil in the vacuum distillation tower is supplied to the second separator 39.

According to such a base oil for lubricant oils, the second step can be carried out in such a way as to include the first distillation step (B-1), dewaxing step (B-2), hydrorefining step (B-3), and second distillation step (B-4).

Hereinabove, the preferred embodiments of the present invention are described but the present invention is not particularly limited to the above embodiments.

Examples

Hereinafter, the present invention is described further in detail with reference to Examples, but is not particularly limited thereto.

(Production Example 1: Preparation of hydrocracking catalyst a)

Water was added to a mixture of 50% by mass of silica zirconia and 50% by mass of alumina binder and kneaded to a clay state to prepare a kneaded product. The kneaded product was extrusion molded, dried, and calcined to prepare a carrier. 5% by weight of a nickel oxide, 20% by weight of a molybdenum oxide and 3% by mass of a phosphorus oxide were supported on the carrier by the impregnation method to obtain a hydrocracking catalyst a.

(Production Example 2: Preparation of hydroisomerization dewaxing catalyst b)

<Production of ZSM-22 zeolite>

ZSM-22 zeolite (hereinafter, in some cases, referred to as "ZSM-22") composed of crystalline aluminosilicate having an Si/Al ratio of 45 was produced by hydrothermal synthesis in the following procedure.

First, the following four types of aqueous solutions were prepared.

Solution A: A solution prepared by dissolving 1.94 g of potassium hydroxide in 6.75 mL of ion-exchanged water.
Solution B: A solution prepared by dissolving 1.33 g of aluminum sulfate 18-hydrate in 5 mL of ion-exchanged water.
Solution C: A solution prepared by diluting 4.18 g of 1,6-hexanediamine (an organic template) with 32.5 mL of ion-exchanged water.
Solution D: A solution prepared by diluting 18 g of colloidal silica (Ludox AS-40 by Grace Davison) with 31 mL of ion-exchanged water.

Next, Solution A was added to Solution B, and the mixture was stirred until the aluminum component completely dissolved. After Solution C was added to this mixed solution, the mixture of Solutions A, B, and C was poured into Solution D with vigorously stirring at room temperature. Further, to the resulting mixture was further added, as a "seed crystal" that promotes crystallization, 0.25 g of a powder of ZSM-22 that had been separately synthesized, and had not been subjected to any special treatment after the synthesis, thereby obtaining a gel.

The gel obtained by the above procedure was transferred into a 120 mL internal volume stainless steel autoclave reactor, and the autoclave reactor was rotated at a rotational speed of about 60 rpm on a tumbling apparatus for 60 hours in an oven at 150°C, causing a hydrothermal synthesis reaction to take place. After the completion of the reaction, the reactor was opened after cooling, and dried overnight in a drier at 60°C, thereby obtaining ZSM-22 having an Si/Al ratio of 45.

<Ion exchange of ZSM-22 containing an organic template>

ZSM-22 obtained in the above was subjected to ion exchange treatment in an aqueous solution containing ammonium ion by the following procedure.

ZSM-22 obtained in the above was taken in a flask, and 100 mL of 0.5 N-ammonium chloride aqueous solution per gram of the ZSM-22 zeolite was added thereto, and the mixture was heated under reflux for 6 hours. After cooling the mixture to room temperature, the supernatant was removed, and the crystalline aluminosilicate was washed with ion-exchanged water. To the resulting product, the same amount of 0.5 N-ammonium chloride aqueous solution as above was added again, and the mixture was heated under reflux for 12 hours.

Then, the solid content was extracted by filtration, washed with ion-exchanged water, and dried overnight in a drier at 60°C, thereby obtaining ion-exchanged $NH_4$ form ZSM-22. The ZSM-22 is a zeolite, which is ion exchanged while containing the organic template therein.

<Binder blending, molding, and calcination)

The $NH_4$ ZSM-22 obtained in the above was mixed with alumina, i.e., a binder, in a mass ratio of 7:3, a small amount of ion-exchanged water was added thereto, and the mixture was kneaded. The obtained viscous fluid was loaded in an extruder and molded into a cylindrical molded product having a diameter of about 1.6 mm and a length of about 10 mm, thereby obtaining a molded product. This molded product was heated under nitrogen atmosphere for 3 hours at 300°C, thereby obtaining a carrier precursor.

<Support of platinum and calcination>

Tetraamminedinitroplatinum$[Pt(NH_3)_4](NO_3)_2$ was dissolved in ion-exchanged water in an amount equivalent to the water absorption amount measured in advance of a carrier precursor, thus obtaining an impregnation solution. This solution was impregnated in the above carrier precursor by incipient wetting method, and support of platinum was carried out so that an amount of platinum was 0.3% by mass relative to the mass of the ZSM-22 zeolite. Next, the obtained impregnation product (catalyst precursor) was dried overnight in a drier at 60°C, and then calcined under an air stream for 3 hours at 400°C, thereby obtaining a hydroisomerization dewaxing catalyst b having a carbon content of 0.56% by mass. Note that the carbon content of the hydroisomerization catalyst was analyzed by a combustion in oxygen airflow - infrared absorption method (measurement instrument: HORIBA, Ltd., EMIA-920V). Specifically, the catalyst b was combusted in oxygen airflow and a carbon content was quantitatively determined by the infrared absorption method.

Further, the micropore volume per unit mass of the obtained hydroisomerization dewaxing catalyst was calculated by the following method. To remove the moisture adsorbed to the hydroisomerization dewaxing catalyst, the pretreatment of vacuum pumping was first carried out at 150°C for 5 hours. The adsorption/desorption isotherm of the pretreated hydroisomerization dewaxing catalyst was automatically measured by the nitrogen constant-volume gas adsorption method at the liquid nitrogen temperature (-196°C) using a BEL Japan, Inc. BELSORP-max. For the data analysis using an analysis software (BEL Master™) attached to the instrument, the measured nitrogen absorption/desorption isotherm was automatically analyzed by t-plot method, and the micropore volume (ml/g) per unit mass of the hydroisomerization dewaxing catalyst was calculated.

Further, the micropore volume per unit mass of the zeolite contained in the catalyst $V_Z$ was calculated by the following formula. Additionally, the alumina used as the binder was subjected to the nitrogen adsorption measurement in the same manner as above and was confirmed not to have a micropore.

$$V_Z = V_c/M_z \times 100$$

In the formula, $V_c$ represents the micropore volume per unit mass of the hydroisomerization dewaxing catalyst, and $M_z$ represents the content percentage (% by mass) of the zeolite contained in the catalyst.

The micropore volume per unit mass of the hydroisomerization dewaxing catalyst b was 0.055 ml/g, and the micropore volume per unit mass of the zeolite contained in the catalyst was 0.079 ml/g.

(Production Example 3: Hydrorefining catalyst c)

Water was added to a mixture of 50% by mass of silica zirconia and 50% by mass of alumina binder and kneaded to a clay state to prepare a kneaded product. The kneaded product was extrusion molded, dried, and calcined to prepare a carrier. 0.3% by weight of platinum and 0.3% by weight of palladium were supported on the carrier by the impregnation method to obtain a hydrorefining catalyst c.

(Example 1)

Hereafter, Examples are illustrated with reference to the apparatus for producing a base oil for lubricant oils 100 shown in the Figure 1.

In Example 1, petroleum slack wax 1 described in Table 1 below was used as a feed oil, and the slack wax was hydrocracked at a reaction temperature of 368°C, a partial pressure of hydrogen of 10 MPa, an liquid hourly space velocity (LHSV) of 1.0 $h^{-1}$, and a hydrogen/oil ratio of 844 $Nm^3/m^3$. For the hydrocracking catalyst, the hydrocracking catalyst a was used. The crack per mass of the heavy matter in this hydrocracking was 8.1%.

For the obtained hydrocracked oil, the fractions having a boiling point of 290°C or less (light fractions) were distilled away using a high-temperature and high-pressure separator (the first separator 20). The light fractions were separated in the gas-liquid separator (the first gas-liquid separator 60) into a gas component mainly containing the hydrogen gas and a liquid fraction (cracked oil), the gas component was guided to the acid gas absorption tower (the acid gas absorption tower 80) at which impurities such as hydrogen sulfide and ammonia were absorbed and removed to obtain the hydrogen gas, which was then suitably mixed with a fresh hydrogen gas and introduced to the hydrocracking reaction tower (the first reactor 10), the hydroisomerization dewaxing tower (the second reactor 30), and the hydrorefining reaction tower (the third reactor 40).

Subsequently, the hydrocracked oil having the light fraction distilled away was hydroisomerization dewaxed under the conditions of a reaction temperature of 320°C, a partial pressure of hydrogen of 5.5 MPa, a liquid hourly space velocity of 1 $h^{-1}$, and a hydrogen/oil ratio of 505 $Nm^3/m^3$ to obtain a dewaxed oil. For the hydroisomerization dewaxing catalyst, the hydroisomerization dewaxing catalyst b was used.

Next, the dewaxed oil was hydrorefined under the conditions of a reaction temperature of 223°C, a partial pressure of hydrogen of 5.5 MPa, a liquid hourly space velocity of 1.5 $h^{-1}$, and a hydrogen/oil ratio of 505 $Nm^3/m^3$ to obtain a hydrorefined oil. For the hydrorefining catalyst, the hydrorefining catalyst c was used. The hydrorefined oil was fractionated, in the distillation towers (the high-temperature and high-pressure separator (the second separator 50) and the vacuum distillation tower 51), into: a fuel oil having a 10% by volume distillation temperature of 280°C or less and corresponding to from LPG to gas oil; a base oil for lubricant oils 1 having a 10% by volume distillation temperature of 280°C or more and a 90% by volume distillation temperature of 390°C or less; a base oil for lubricant oils 2 having a 10% by volume distillation temperature of 390°C or more and a 90% by volume distillation temperature of 490°C or less; and a base oil for lubricant oils 3 having a 1 0% by volume distillation temperature of 490°C or more and a 90% by volume distillation temperature of 530°C or less, thereby obtaining the fuel oil and the base oils for lubricant oils 1 to 3. Under these processing conditions, the operation was continuously run for 200 hours, and the characteristics and yield of each of the base oil for lubricant oils were determined.

Table 1 shows the characteristics of slack wax 1. Further, Table 2 shows the hydrocracking conditions and the characteristics of the hydrocracked oil obtained (after the removal of the light fraction). Further, Table 4 shows the hydroisomerization dewaxing conditions and the hydrorefining conditions. Furthermore, Table 6 shows the characteristics of the base oils for lubricant oils 1 to 3 and the yield of each of the base oils for lubricant oils.

(Examples 2 to 5)

The 200-hour continuous process was carried out in the same manner as in Example 1, except that the hydrocracking conditions, the hydroisomerization dewaxing conditions and the hydrorefining conditions were changed as described in Tables 2 and 4. The characteristics of the obtained base oils for lubricant oils 1 to 3 and the yield of each of the base oils for lubricant oils are as described in Table 6.

(Comparative Examples 1 to 3)

The 200-hour continuous process was carried out in the same manner as in Example 1, except that the hydrocracking conditions, the hydroisomerization dewaxing conditions and the hydrorefining conditions were changed as described in Tables 3 and 5. The characteristics of the obtained base oils for lubricant oils 1 to 3 and the yield of each of the base oils for lubricant oils are as described in Table 7.

[Table 1]

| Feed oil | Petroleum slack wax 1 | Petroleum slack wax 2 | Petroleum slack wax 3 |
|---|---|---|---|
| T10 (°C) | 458 | 456 | 461 |
| T90 (°C) | 552 | 550 | 556 |
| Density @ 15°C (g/cm$^3$) | 0.8523 | 0.8533 | 0.8540 |
| 100°C Kinematic viscosity (mm$^2$/s) | 8.000 | 8.010 | 8.105 |
| Sulfur (% by mass) | 0.18 | 0.18 | 0.18 |
| Nitrogen (ppm by mass) | 41 | 41 | 41 |
| Oil (% by mass) | 9.9 | 12.1 | 30.5 |
| C30 or more (% by mass) | 94.8 | 94.8 | 94.8 |
| C30-60 (% by mass) | 94.5 | 94.5 | 94.5 |

Note that, in Table, the terms "T10(°C)" and "T90(°C)" show the values at a 10% by volume distillation temperature and a 90% by volume distillation temperature measured in conformity with JIS K2254 "Petroleum products - Determination of distillation characteristics - Gas chromatograph system." Further, the term "Density @ 15°C (g/cm$^3$)" shows the value of the density at 15°C measured in conformity with JIS K2254 "Crude oil and petroleum products - Determination of density, mass and volume conversion table." Furthermore, the term "100°C Kinematic viscosity (mm$^2$/s)" shows the value of a kinematic viscosity at 100°C measured in conformity with JIS K2283 "Crude oil and petroleum products - Determination of kinematic viscosity and calculation of viscosity index from kinematic viscosity." Still furthermore, the term "Sulfur (% by mass)" shows a content of sulfur measured in conformity with JIS K2541 "Crude oil and petroleum products - Determination of Sulfur Content." Also, the term "Nitrogen (ppm by mass) shows a content of nitrogen measured in conformity with JIS K2609 "Crude petroleum and petroleum products - Determination of nitrogen content." Also, the term "Oil (% by mass)" shows a content of oil in the petroleum slack wax measured in conformity with "Determination of oil content" described in JIS K2235. Further, the terms "C30 or more (% by mass)" and "C30-60 (% by mass)" show the content percentage of the hydrocarbon having 30 or more carbon atoms and the content percentage of hydrocarbon having 30 to 60 carbon atoms, which were determined based on the component analysis results separated and quantified using a Shimadzu gas chromatograph GC-2010, on which a non-polar column (Ultra Alloy - 1HT (30 m × 0.25 mmϕ) and an FID (flame ionization detector) were mounted.

[Table 2]

| | | Example 1 | Example 2 | Example 3 | Example 4 | Example 5 |
|---|---|---|---|---|---|---|
| Feed oil | Petroleum slack wax | 1 | 1 | 2 | 2 | 1 |
| Hydrocracking conditions | Reaction temperature (°C) | 368 | 374 | 373 | 371 | 364 |
| | Partial pressure of hydrogen (MPa) | 10 | 10 | 10 | 8 | 15 |
| | LHSV ($h^{-1}$) | 1.0 | 1.0 | 1.0 | 1.0 | 0.3 |
| | Hydrogen oil ratio ($Nm^3/m^3$) | 844 | 844 | 844 | 844 | 844 |
| | Crack per mass (% by mass) | 8.1 | 27.1 | 25.5 | 24.6 | 17.2 |
| Product oil | Sulfur (ppm by mass) | 2 | 1 | 1 | 1 | 1 |

[Table 3]

| | | Comparative Example 1 | Comparative Example 2 | Comparative Example 3 |
|---|---|---|---|---|
| Feed oil | Petroleum slack wax | 1 | 1 | 3 |
| Hydrocracking conditions | Reaction temperature (°C) | 360 | 378 | 375 |
| | Partial pressure of hydrogen (MPa) | 10 | 10 | 10 |
| | LHSV ($h^{-1}$) | 1.0 | 1.0 | 1.0 |
| | Hydrogen oil ratio ($Nm^3/m^3$) | 844 | 844 | 844 |
| | Crack per mass (% by mass) | 4.1 | 33.5 | 25.3 |
| Product oil | Sulfur (ppm by mass) | 3 | 1 | 2 |

[Table 4]

| | | Example 1 | Example 2 | Example 3 | Example 4 | Example 5 |
|---|---|---|---|---|---|---|
| Hydroisomerization dewaxing conditions | Reaction temperature (°C) | 320 | 315 | 316 | 318 | 320 |
| | Partial pressure of hydrogen (MPa) | 5.5 | 5.5 | 5.5 | 5.5 | 5.5 |
| | LHSV ($h^{-1}$) | 1.0 | 1.0 | 1.0 | 1.0 | 1.0 |
| | Hydrogen oil ratio ($Nm^3/m^3$) | 505 | 505 | 505 | 505 | 505 |
| Hydrorefining conditions | Reaction temperature (°C) | 223 | 223 | 224 | 223 | 223 |
| | Partial pressure of hydrogen (MPa) | 5.5 | 5.5 | 5.5 | 5.5 | 5.5 |
| | LHSV ($h^{-1}$) | 1.5 | 1.5 | 1.5 | 1.5 | 1.5 |
| | Hydrogen oil ratio ($Nm^3/m^3$) | 505 | 505 | 505 | 505 | 505 |

[Table 5]

| | | Comparative Example 1 | Comparative Example 2 | Comparative Example 3 |
|---|---|---|---|---|
| Hydroisomerization dewaxing conditions | Reaction temperature (°C) | 272 | 272 | 316 |
| | Partial pressure of hydrogen (MPa) | 5.5 | 5.5 | 5.5 |
| | LHSV ($h^{-1}$) | 1.0 | 1.0 | 1.0 |
| | Hydrogen oil ratio ($Nm^3/m^3$) | 505 | 505 | 505 |
| Hydrorefining conditions | Reaction temperature (°C) | 223 | 224 | 224 |
| | Partial pressure of hydrogen (MPa) | 5.5 | 5.5 | 5.5 |
| | LHSV ($h^{-1}$) | 1.5 | 1.5 | 1.5 |
| | Hydrogen oil ratio ($Nm^3/m^3$) | 505 | 505 | 505 |

[Table 6]

| | Example 1 | Example 2 | Example 3 | Example 4 | Example 5 |
|---|---|---|---|---|---|
| To feed oil yield of fuel oil (% by mass) | 27.3 | 27.1 | 26.3 | 33.0 | 27.5 |

(continued)

| | | Example 1 | Example 2 | Example 3 | Example 4 | Example 5 |
|---|---|---|---|---|---|---|
| Base oil lubricant oils 1 | To feed oil yield (% by mass) | 4.5 | 6.1 | 7.2 | 5.5 | 7.2 |
| | 100°C Kinematic viscosity ($mm^2/s$) | 2.565 | 2.686 | 2.687 | 2.541 | 2.55 |
| | Viscosity index | 123 | 122 | 120 | 118 | 124 |
| | Pour point (°C) | -27.5 | -27.5 | -27.5 | -25 | -27.5 |
| Base oil for lubricant oils 2 | To feed oil yield (% by mass) | 12.1 | 14.2 | 15.3 | 11.2 | 15.0 |
| | 100% Kinematic viscosity ($mm^2/s$) | 4.250 | 4.058 | 4.370 | 4.005 | 4.005 |
| | Viscosity index | 139 | 137 | 135 | 134 | 140 |
| | Pour point (°C) | -17.5 | -18 | -20 | -18 | -18 |
| Base oil for lubricant oils 3 | To feed oil yield (% by mass) | 56.1 | 52.6 | 51.2 | 50.3 | 50.3 |
| | 100°C Kinematic viscosity ($mm^2/s$) | 6.332 | 6.393 | 8.492 | 8.335 | 6.345 |
| | Viscosity index | 155 | 154 | 152 | 150 | 156 |
| | Pour point (°C) | -12.5 | -12.5 | -12.5 | -12.5 | -12.5 |

Note that, in Table, the terms "100°C Kinematic viscosity ($mm^2/s$) and "Viscosity index" show the value of kinematic viscosity at 100°C and the value of viscosity index, which were measured in conformity with JIS K2283 "Crude petroleum and petroleum products - Determination of kinematic viscosity and calculation of viscosity index from kinematic viscosity." Further, the term "Pour point (°C)" shows the value of a pour point measured in conformity with JIS K2269 "Testing Methods for Pour Point and Cloud Point of Crude Oil and Petroleum Products."

[Table 7]

| | | Comparative Example 1 | Comparative Example 2 | Comparative Example 3 |
|---|---|---|---|---|
| To feed oil yield | of fuel oil (% by mass) | 25.6 | 32.3 | 35.1 |
| Base oil for lubricant oils 1 | To feed oil yield (% by mass) | 3.5 | 7.3 | 5.8 |
| | 100°C Kinematic viscosity ($mm^2/s$) | 2.642 | 2.43 | 2.647 |
| | Viscosity index | 113 | 112 | 114 |
| | Pour point (°C) | -25 | -27.5 | -27.5 |
| Base oil for lubricant oils 2 | To feed oil yield (% by mass) | 10.8 | 20.1 | 17.4 |
| | 100°C Kinematic viscosity ($mm^2/s$) | 4.023 | 4.033 | 3.989 |
| | Viscosity index | 129 | 128 | 129 |
| | Pour point (°C) | -18 | -20 | -18 |

(continued)

| | | Comparative Example 1 | Comparative Example 2 | Comparative Example 3 |
|---|---|---|---|---|
| Base oil for lubricant oils 3 | To feed oil yield (% by mass) | 60.1 | 40.3 | 41.7 |
| | 100°C Kinematic viscosity ($mm^2/s$) | 6.47 | 6.38 | 6.161 |
| | Viscosity index | 151 | 145 | 148 |
| | Pour point (°C) | -10 | -10 | -12.5 |

**Reference Signs List**

10 ··· First reactor, 20 ··· First separator, 30 ··· Second reactor, 40 ··· Third reactor, 50 ··· Second separator, 51 ··· Vacuum distillation tower, 60 ··· First gas-liquid separator, 70 ··· Second gas-liquid separator, 80 ··· Acid gas absorption tower, L1, L2, L3, L4, L7, L8, L9, L10, L10', L11, L12, L13, L21, L22, L23, L24, L31, L32, L33, L34, L35, L36, L40 ··· Flow channels, 100 ··· Apparatus for producing a base oil for lubricant oils

**Claims**

**1.** A method for producing a base oil for lubricant oils comprising:

a first step of hydrocracking a petroleum slack wax having a content percentage of a heavy matter having 30 or more carbon atoms of 80% by mass or more and a content percentage of an oil of 15% by mass or less so that a crack per mass of the heavy matter is 5 to 30% by mass to obtain a hydrocracked oil comprising the heavy matter and a hydrocracked product thereof; and
a second step of obtaining the base oil for lubricant oils from the hydrocracked oil.

**2.** The method according to Claim 1, wherein the second step comprises:

a step of obtaining a dewaxed oil by hydroisomerization dewaxing the hydrocracked oil;
a step of obtaining a hydrorefined oil by hydrorefining the dewaxed oil; and
a step of obtaining the base oil for lubricant oils by distilling the hydrorefined oil.

**3.** The method according to Claim 1, wherein the second step comprises:

a step of obtaining a base oil fraction comprising the hydrocracked product by distilling the hydrocracked oil;
a step of obtaining a dewaxed oil by hydroisomerization dewaxing the base oil fraction;
a step of obtaining a hydrorefined oil by hydrorefining the dewaxed oil; and
a step of obtaining the base oil for lubricant oils by distilling the hydrorefined oil.

**4.** The method according to any one of Claims 1 to 3, further comprising a step of obtaining the petroleum slack wax from a high-oil-content slack wax having a content percentage of an oil of greater than 15% by mass.

**5.** The method according to any one of Claims 1 to 4, wherein a content percentage of sulfur in the petroleum slack wax is 0.0001 to 3.0% by mass.

**6.** The method according to any one of Claims 1 to 5, wherein
a kinematic viscosity of the base oil for lubricant oils at 100°C is 3.5 $mm^2/s$ or more and 4.5 $mm^2/s$ or less, and
a viscosity index of the base oil for lubricant oils is 135 or more.

**7.** The method according to any one of Claims 1 to 6, wherein
the first step is a step of contacting the petroleum slack wax with a hydrocracking catalyst in the presence of hydrogen to hydrocrack the petroleum slack wax, and
the hydrocracking catalyst contains a porous inorganic oxide comprising 2 or more elements selected from the group consisting of aluminium, silicon, zirconium, boron, titanium and magnesium and at least 1 active metal selected from elements belonging to the Group 6, 8, 9 and 10 in the periodic table supported on the porous inorganic oxide.

**8.** The method according to Claim 2 or 3, wherein
the hydroisomerization dewaxing is carried out using a hydroisomerization dewaxing catalyst,
the hydroisomerization dewaxing catalyst containing a carrier comprising zeolite having a 10-membered ring one dimensional pore structure and a binder, and platinum and/or palladium supported on the carrier, and having a carbon content of 0.4 to 3.5% by mass, and
the zeolite is derived from a cation-exchanged form of an organic template-containing zeolite containing an organic template and having a 10-membered ring one dimensional pore structure.

**9.** The method according to Claim 2 or 3, wherein
the hydroisomerization dewaxing is carried out using a hydroisomerization dewaxing catalyst, the hydroisomerization dewaxing catalyst containing a carrier comprising zeolite having a 10-membered ring one dimensional pore structure and a binder, and platinum and/or palladium supported on the carrier, and having a micro pore volume of 0.02 to 0.12 ml/g, and
the zeolite is derived from a cation-exchanged form of an organic template-containing zeolite containing an organic template and having a 10-membered ring one dimensional pore structure, and a micro pore volume per unit mass of the zeolite is 0.01 to 0.12 ml/g.

Fig.1
100
L40
80
L22
L24
L32
L31
L1
L4
60
L21
L34
L33
L36
L35
70
L10
L23
20
L3
L10'
L11
Product oil 1
Product oil 2
L12
50
L9
51
Product oil 3
L13
10
L2
30
L7
40
L8

# INTERNATIONAL SEARCH REPORT

International application No.
PCT/JP2016/064899

A. CLASSIFICATION OF SUBJECT MATTER

*C10G65/12*(2006.01)i, *B01J23/44*(2006.01)i, *B01J27/19*(2006.01)i, *B01J29/74*(2006.01)i, *C10G45/64*(2006.01)i, *C10G47/12*(2006.01)i

According to International Patent Classification (IPC) or to both national classification and IPC

B. FIELDS SEARCHED

Minimum documentation searched (classification system followed by classification symbols)
C10G65/12, B01J23/44, B01J27/19, B01J29/74, C10G45/64, C10G47/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2014/125683 A1 (JX Nippon Oil & Energy Corp.), 21 August 2014 (21.08.2014), entire text & US 2015/0368569 A1 entire text & CN 104995285 A & KR 10-2015-0118968 A | 1-9 |
| Y | JP 10-511425 A (Mobil Oil Corp.), 04 November 1998 (04.11.1998), page 6, lines 20 to 28; page 16, lines 4 to 22 & WO 1996/026993 A1 page 2, lines 19 to 29; page 12, lines 10 to 38 & EP 799082 A1 & AU 4289196 A & CA 2204127 A | 1-9 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 19 July 2016 (19.07.16) | 02 August 2016 (02.08.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/064899

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-509090 A (Shell Internationale Research Maatschappij B.V.), 16 March 2006 (16.03.2006), & US 2006/0065575 A1 & WO 2004/053027 A1 & EP 1581602 A1 & KR 10-2005-0085488 A & CN 1723263 A | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006502297 A